# EUROPÄISCHE PATENTSCHRIFT

(11) **EP 4 433 419 B1**
(45) Veröffentlichungstag und Bekanntmachung des Hinweises auf die Patenterteilung: **18.02.2026**
(21) Anmeldenummer: 22821864.0
(22) Anmeldetag: 17.11.2022
(51) Int. Cl.: C01B 25/00, C07F 9/22, C07F 9/24, C07F 9/58

(54) **LIGANDENUNTERSTÜTZTE DESOXYGENIERUNG VON PHOSPHATEN ZU STICKSTOFFHALTIGEN PHOSPHOR(V)-PRÄKURSOREN UND DEREN WEITERE UMSETZUNG ZU VERSCHIEDENEN OXYPHOSPHORVERBINDUNGEN**
LIGAND-ASSISTED DEOXYGENATION OF PHOSPHATES TO NITROGENOUS PHOSPHOROUS (V) PRECURSORS AND THEIR CONVERSION TO VARIOUS OXYPHOSPHORUS COMPOUNDS
DÉSOXYGÉNATION DES PHOSPHATES ASSISTÉS PAR DES LIGANDS EN PRÉCURSEURS DU PHOSPHORE CONTENANT DE L'AZOTE ET LEUR RÉACTION ULTÉRIEURE POUR OBTENIR DIFFÉRENTS COMPOSÉS D'OXYPHOSPHORE

(30) Priorität: 19.11.2021 EP 21209296
(43) Veröffentlichungstag der Anmeldung: 25.09.2024
(73) Patentinhaber: Technische Universität Dresden, 01069 Dresden (DE)
(72) Erfinder: WEIGAND, Jan, 01309 Dresden (DE); SCHWEDTMANN, Kai, 01069 Dresden (DE); SCHOEMAKER, Robin, 01099 Dresden (DE); SCHULZ, Stephen, 01099 Dresden (DE)
(74) Vertreter: Maiwald GmbH
(86) Internationale Anmeldenummer: PCT/EP2022/082279
(87) Internationale Veröffentlichungsnummer: WO 2023/089031

(56) Entgegenhaltungen:
- OSUMAH ABDULAKEEM ET AL: "Diamidophosphate (DAP): A Plausible Prebiotic Phosphorylating Reagent with a Chem to BioChem Potential?", vol. 22, no. 21, 3 November 2021 (2021-11-03), pages 3001 - 3009, XP055916857, ISSN: 1439-4227, Retrieved from the Internet <URL:https://onlinelibrary.wiley.com/doi/full-xml/10.1002/cbic.202100274> [retrieved on 20220504], DOI: 10.1002/cbic.202100274
- ROVNANÍK PAVEL ET AL: "Base-Induced Dismutation of POCl 3 and POBr 3 :? Synthesis and Structure of Ligand-Stabilized Dioxophosphonium Cations", INORGANIC CHEMISTRY, vol. 43, no. 7, 3 April 2004 (2004-04-03), Easton , US, pages 2435 - 2442, XP055916964, ISSN: 0020-1669, DOI: 10.1021/ic0354163
- THILO E.: "The Structural Chemistry of Condensed Inorganic Phosphates", vol. 4, no. 12, 2 December 1965 (1965-12-02), DE, pages 1061 - 1071, XP055916983, ISSN: 0570-0833, Retrieved from the Internet <URL:http://dx.doi.org/10.1002/anie.196510611> [retrieved on 20220504], DOI: 10.1002/anie.196510611
- KRISHNAMURTHY RAMANARAYANAN ET AL: "Regioselective[alpha]-Phosphorylation of Aldoses in Aqueous Solution", ANGEWANDTE CHEMIE INTERNATIONAL EDITION, vol. 39, no. 13, 3 July 2000 (2000-07-03), pages 2281 - 2285, XP055916996, ISSN: 1433-7851, DOI: 10.1002/1521-3773(20000703)39:13<2281::AID-ANIE2281>3.0.CO;2-2
- WALTER FELDMANN, ERICH THILO: "Amidotriphosphat", ZEITSCHRIFT FÜR ANORGANISCHE UND ALLGEMEINE CHEMIE, vol. 328, no. 3-4, 3 April 1964 (1964-04-03), pages 113 - 126, XP002806355

## Beschreibung

Phosphor ist als molekularer Baustein für alle Lebensformen essentiell, ist zentraler Bestandteil in der weltweiten Lebensmittelproduktion und hat unzählige Anwendungen in der Industrie (siehe: W. Schipper, Eur. J. Inorg. Chem. 2014, 1567) sowie in den Bereichen Grundlagenforschung und anwendungsorientierter Forschung in Universitäten und Forschungsinstituten.

Vor diesem Hintergrund ist die derzeitige Erschöpfung und Ausbeutung der verfügbaren Phosphorressourcen äußerst besorgniserregend. Phosphorressourcen werden von der Europäischen Kommission bereits als kritische Rohstoffe angesehen (siehe: European Commission, Report of the Ad hoc Working Group on defining critical raw materials: Report on Critical Raw Materials for the EU Ref. Ares, 2015, 1819503 - 29/04/2015*).* Darüber hinaus sind derzeitige Synthesemethoden zur Herstellung der meisten Phosphorverbindungen ressourcenineffizient, energieintensiv und erfordern gefährliche und toxische Reagenzien (siehe: a) Emsley, J. The 13th Element: The Sordid Tale of Murder, Fire, and Phosphorus; John Wiley & Sons, Inc.: New York, 2000; b) H. Diskowski, T. Hofmann, "Phosphorus," Ullmann's Encyclopedia of Industrial Chemistry (Wiley, 2000); c) K. Schrödter et al., "Phosphoric Acid and Phosphates," Ullmann's Encyclopedia of Industrial Chemistry (Wiley, Weinheim, Germany, 2008); d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018**).**

Die natürliche, aber nicht erneuerbare Ressource aller Phosphorverbindungen, ist Phosphatgestein wie zum Beispiel Apatit (Ca₅(PO₄)₃(F, OH, CI)). Phosphor liegt hier in seiner stabilsten Oxidationsstufe +V als Phosphat (PO₄³⁻) vor.

In diesem Zusammenhang spricht man von primären Phosphorressourcen. Sekundäre Phosphorressourcen sind solche, die durch Recycling zur Verfügung gestellt werden.

Die überwiegende Mehrheit der industriell relevanten phosphorhaltigen Produkte wie Pharmazeutika, Düngemittel, Flammschutzmittel, Pestizide, Weichmacher und Lebensmittel- oder Arzneimittelzusätze usw. weist das zentrale Phosphoratom in seiner stabilsten Oxidationsstufe +V auf (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** J. L. Jones, Y. G. Yingling, I. M. Reaney, P. Westerhoff, MRS Bull. 2020, 45, 7). Diese Phosphor(V)-Verbindungen können nach der Anzahl der an das Phosphoratom gebundenen Sauerstoffatome klassifiziert werden, d.h. Phosphate (PO₄³⁻), Phosphonate (RPO₃²⁻), Phosphinate (R₂PO₂⁻) und Phosphanoxide (R₃PO).

Der Großteil des heute abgebauten Phosphatminerals wird für die Synthese von Phosphorsäure (H₃PO₄) für die Düngemittelindustrie verwendet. Die Synthese erfolgt meist im sogenannten Nassverfahren. Dabei erfolgt der Aufschluss von Rohphosphat mit Mineralsäuren (Schwefel-, Salz- oder Salpetersäure). In diesem Verfahren fallen große Mengen Nebenprodukte an.

Alternativ lässt sich Phosphorsäure ausgehend von der elektrothermischen Reduktion von Phosphatgestein zu weißem Phosphor (P₄) erhalten. Weißer Phosphor ist die wichtigste industrielle Phosphorquelle für die Lebensmittelherstellung, sowie für pharmazeutische, landwirtschaftliche und zahlreiche andere industrielle Anwendungen. Es erfolgt die Verbrennung von weißem Phosphor (P₄) zu Phosphorpentaoxid (P₄O₁₀) und die anschließende Hydrolyse (sogenannte thermische Phosphorsäure).

Mit Ausnahme der vergleichsweise minderwertigen Phosphorsäure (H₃PO₄), die aus dem oben erwähnten Nassverfahren gewonnen wird, wird der synthetisch relevante Phosphor im thermischen Verfahren zu P₄ reduziert und ausgehend davon entweder zu P₄O₁₀ oxidiert, zu PCl₃ chloriert, oder zu OPCl₃ oxychloriert.

Diese drei Phosphorverbindungen (P₄O₁₀, PCl₃, OPCl₃) stellen die wichtigsten Phosphorquellen von synthetischer Relevanz dar (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018**).** Unter den verschiedenen Zwischenprodukten der weiteren Synthesestufen ist die wichtigste Phosphor(III)-Quelle Phosphortrichlorid (PCl₃). Hierbei handelt es sich um eine korrosive, toxische und flüchtige Flüssigkeit. Phosphortrichlorid wird in nachfolgenden Transformationsreaktionen wie Hydrolyse, Alkoholyse und Salzmetathese verwendet, um industriell wichtige Phosphorchemikalien sowie Feinchemikalien für den akademischen Bereich zu erhalten. Bei diesen Transformationsreaktionen werden die Chloratome des PCl₃ als Abfall in Form von Salzfracht oder in Form von korrosiven Gasen (z.B. HCl) in Kauf genommen, was einer zeitgemäßen und atomökonomischen Verwendung widerspricht (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018**),** f) OSUMAH ABDULAKEEM ET AL: "Diamidophosphate (DAP): A Plausible Prebiotic Phosphorylating Reagent with a Chem to BioChem Potential?",CHEMBIOCHEM, Bd. 22, Nr. 21, 2021), Seiten 3001-3009, g) ROVNANÍK PAVEL ET AL: "Base-Induced Dismutation of POCl3 and POBr3? Synthesis and Structure of Ligand-Stabilized Dioxophosphonium Cations",INORGANIC CHEMISTRY, Bd. 43, Nr. 7, 2004, Seiten 2435-2442, h) THILO E.: "The Structural Chemistry of Condensed Inorganic Phosphates",ANGEWANTE CHEMIE INTERNATIONAL EDITION, Bd. 4, Nr. 12, 1965, Seiten 1061-1071, i) KRISHNAMURTHY RAMANARAYANAN ET AL: "Regioselective[alpha]-Phosphorylation of Aldoses in Aqueous Solution",ANGEWANDTE CHEMIE INTERNATIONAL EDITION, Bd. 39, Nr. 13, 2000, Seiten 2281-2285, j) WALTER FELDMANN, ERICH THILO: "Amidotriphosphat",ZEITSCHRIFT FÜR ANORGANISCHE UND ALLGEMEINE CHEMIE, Bd. 328, Nr. 3-4, 1964, Seiten 113-126.

Die letzten Schritte zur Bildung industriell relevanter Oxyphosphorverbindungen umfassen die Alkoholyse oder Hydrolyse, die Arbuzov-Reaktion, oder die Grignard-Reaktion. Die relevanten Reaktionsschritte sind im Folgenden Schema 1 gezeigt.

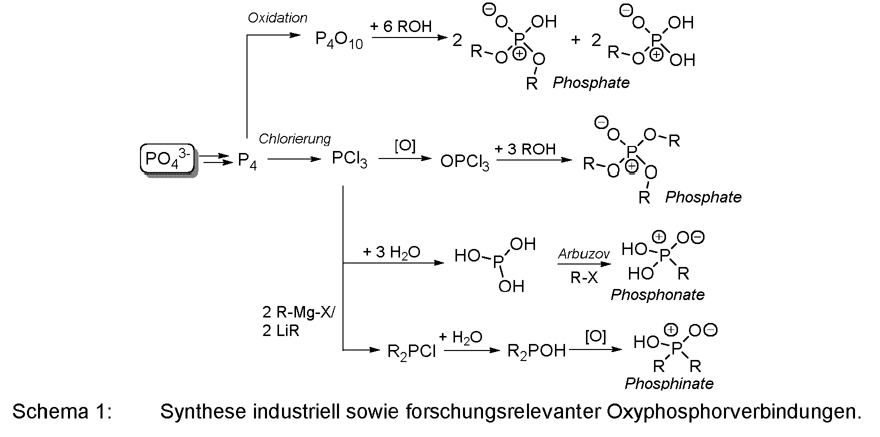

Bei diesen Reaktionen fallen große Mengen an Abfällen an. Außerdem verbraucht die heutige Phosphorchemie enorme Mengen Energie, um das nicht erneuerbare Rohstoffphosphat (PO₄³⁻) erst zu reduzieren (P₄), um es anschließend zu chlorieren (PCl₃) oder zu reoxidieren (P₄O₁₀, POCl₃).

Zusammenfassend lässt sich sagen, dass die heutige Aufarbeitung des Phosphaterzes durch den elektrothermischen Prozess, gefolgt von Oxidation, Chlorierung oder Oxychlorierung, äußerst energieintensiv ist und große Mengen Abfall produziert. Dabei wird das Phosphaterz erst sehr aufwendig zu P₄ reduziert und dieses wiederum in die Grundchemikalien P₄O₁₀, PCl₃ und OPCl₃ umgewandelt. Phosphortrichlorid (PCl₃) und Phosphorylchlorid (OPCl₃) sind ätzende, toxische und flüchtige Flüssigkeiten. Diese Verbindungen werden in nachfolgenden Transformationsreaktionen wie Hydrolyse, Alkoholyse und Salzmetathese verwendet, um Phosphorchemikalien und Feinchemikalien für den akademischen und pharmazeutischen Bereich zu erhalten. Letztendlich gelangt ein großer Teil der Chloratome, die bei der Chlorierung von P₄ mit Chlorgas entstehen, in Salzabfälle ohne jeden kommerziellen Wert.

Die bekannten Verfahren sind also vor allem sehr energieintensiv, sind schwer zu handhaben wegen des Einsatzes korrosiver, toxischer und flüchtiger Flüssigkeiten bzw. Gase, und produzieren große Mengen Abfall. Dies zählt nach wie vor zu den größten Problemen der Phosphorchemie (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018**).**

Es besteht daher ein großer Bedarf an Reaktionsverfahren, die in der Lage sind, mindestens einen der oben genannten Nachteile zu überwinden.

In diesem Zusammenhang haben Cummins und Mitarbeiter, ausgehend von Tetrabutylammoniumtrimetaphosphat ([*n*Bu₄N]₃[P₃O₉]), eine Synthese zu Bis(trichlorosilyl)phosphid als Tetrabutylammoniumsalz ([*n*Bu₄N][(SiCl₃)₂P]) entwickelt, woraus sich eine Reihe weiterer relevanter Phosphorchemikalien synthetisieren lassen. Hierzu wird Tetrabutylammoniumtrimetaphosphat ([*n*Bu₄N]₃[P₃O₉]) in einem Stahlreaktor in *neat* Trichlorosilan (HSiCl₃; Siedepunkt 32 °C) bei 100 °C für 72 h reagiert. Dies liefert das Salz [*n*Bu₄N][(SiCl₃)₂P] in 65% Ausbeute (siehe: M. B. Geeson, C. C. Cummins, Science, 2018, 359, 1383). Nachteile dieser Methode sind: a) der Kationenaustausch von Natrium (Na⁺) zu Tetrabutylammonium ([*n*Bu₄N]⁺), um die Löslichkeit von [P₃O₉]³⁻ zu erhöhen, b) die Reaktion mit der pyrophoren, ätzenden und giftigen Flüssigkeit HSiCl₃ (Siedepunkt 32 °C), die c) bei hydrothermalen Bedingungen (100 °C) in einem Stahlreaktor durchgeführt wird, sowie d) die lange Reaktionsdauer von 72 h.

Dennoch bietet dieser Ansatz eine alternative und im Labormaßstab durchführbare Möglichkeit aus Metaphosphaten [P₃O₉]³⁻ Phosphorchemikalien darzustellen. Dies sollte laut Cummins und Mitarbeiter dazu anregen, alternative Methoden zu erforschen (siehe: M. B. Geeson, C. C. Cummins, ACS Cent. Sci. 2020, 6, 848).

Die vorliegende Erfindung löst mehrere der oben genannten Probleme, indem ein Verfahren bereitstellt wird, das es erlaubt, auf direktem Weg ausgehend von Phosphat (PO₄³⁻) oder Phosphorsäure zu den gewünschten Oxyphosphorverbindungen in der Oxidationsstufe +V zu gelangen, ohne vorherigen Wechsel der Oxidationsstufe.

Dabei erfolgt die direkte Umwandlung von primären und sekundären Phosphorressourcen basierend auf Phosphorsäure oder Phosphaten, in die entsprechenden Oxyphosphorverbindungen unter Beibehaltung der Oxidationsstufe +V des eingesetzten Phosphoratoms.

Die Synthese industriell und akademisch relevanter Oxyphosphorverbindungen wird durch das erfindungsgemäße Verfahren demgemäß gezielt vereinfacht und verkürzt. Dadurch werden Zeit, Energie, Kosten, chemischer Abfall sowie gefährliche Reagenzien (wie Cl₂ oder HSiCl₃) eingespart.

Die vorliegende Erfindung ermöglicht es damit, eine atom- und energieeffizientere Lösung zur Herstellung von Oxyphosphorverbindungen der Oxidationsstufe (V) direkt aus Phosphorsäure bzw. Phosphaten anzubieten.

Zentraler Bestandteil der vorliegenden Erfindung ist dabei die Synthese stickstoffhaltiger Phosphor(V)-Präkursoren, die auch als Intermediate bezeichnet werden können. Diese können mit geeigneten Nucleophilen zu den gewünschten Oxyphosphorverbindungen, wie Organophosphaten (Phosphorsäureestern) und Phosphinaten umgesetzt werden.

Diese stickstoffhaltigen Phosphor(V)-Präkursoren sind bereits bekannt, allerdings erfüllt deren Synthese nicht die hier gestellten Anforderungen (siehe P. Rovnanik, L. Kapička, J. Taraba, M. Černík, *Inorg. Chem.* **2004,** *43*, 2435). Auch andere Synthesen von Oxyphosphorverbindungen ausgehend von Phosphorsäure bzw. Phosphaten sind bereits bekannt, erfüllen aber ebenfalls nicht die hier gestellten Anforderungen (A. Sakakura, M. Katsukawa, K. Ishihara, Angew. Chemie Int. Ed. 2007, 46, 1423; A. Sakakura, M. Katsukawa, T. Hayashi, K. Ishihara, Green Chem. 2007, 9, 1166; S. Mohamady, S. D. Taylor, Org. Lett. 2016, 18, 580; S. M. Shepard, C. C. Cummins, ChemRxiv, 2021, DOI: 10.33774/chemrxiv-2021-8v8nx, (not peer reviewed)).

Die vorliegende Erfindung ist demgemäß in einem ersten Aspekt auf ein Verfahren zur Synthese stickstoffhaltiger Phosphor(V)-Präkursoren der Formel (I) gerichtet, 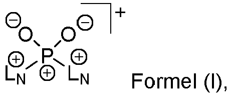 wobei das Verfahren die folgenden Schritte in der angegebenen Reihenfolge umfasst:
a) Bereitstellung einer Phosphat-Verbindung;
b) Umsetzung der Phosphat-Verbindung aus Schritt a) mit einem Sauerstoffakzeptor in Gegenwart einer Lewis-Base L_{N}, die zur Koordination über ein Stickstoffatom fähig ist,
wobei der Sauerstoffakzeptor das Kation eines Sulfonsäureanhydrids gemäß der Formel (II) ist und das Sulfonsäureanhydrid gemäß der Formel (III) ist, 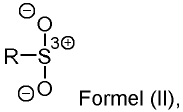 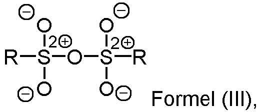 wobei gemäß Schritt b) alternativ entweder
b1) die Phosphat-Verbindung aus Schritt a) mit einem Sulfonsäureanhydrid gemäß der Formel (III) in Gegenwart einer Lewis-Base L_{N} zur Reaktion gebracht wird,
   oder
b2) die Phosphat-Verbindung aus Schritt a) mit dem Reaktionsprodukt eines Sulfonsäureanhydrids gemäß der Formel (III) mit einer Lewis-Base L_{N} zur Reaktion gebracht wird, wobei das genannte Reaktionsprodukt gemäß der Formel (IV) ist

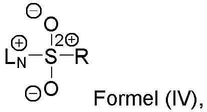

wobei R ein aliphatischer oder aromatischer Kohlenwasserstoffrest ist, der Heteroatome enthalten kann, wobei die Anzahl der Kohlenstoffatome des Rests R von 1 bis 21 ist, und die Heteroatome ausgewählt sind aus der Gruppe bestehend aus Sauerstoff, Stickstoff, Fluor, Chlor, Brom, lod, und deren Mischungen,
wobei die Lewis-Base L_{N}, die zur Koordination über ein Stickstoffatom fähig ist, eine stickstoffhaltige heteroaromatische Verbindung ist, die einen sechsgliedrigen heteroaromatischen Ring enthält, der ein zur Koordination fähiges Stickstoffatom enthält, und wobei die Anzahl der Kohlenstoffatome der Lewis-Base L_{N} von 4 bis 19 ist.

Der in dem Verfahren zur Synthese stickstoffhaltiger Phosphor(V)-Präkursoren der Formel (I) gemäß Schritt b) wirksame Sauerstoffakzeptor der Formel (II) wird demgemäß entweder in Form eines Sulfonsäureanhydrids der Formel (III) eingesetzt, oder wird alternativ eingesetzt in Form des Reaktionsprodukts gemäß der Formel (IV), das zuvor durch Reaktion eines Sulfonsäureanhydrids der Formel (III) mit einer Lewis-Base L_{N} hergestellt worden ist. In beiden Fällen wird der wirksame Sauerstoffakzeptor der Formel (II) während der Reaktion gemäß Schritt b) in situ freigesetzt und reagiert mit der Phosphat-Verbindung aus Schritt a) in Gegenwart einer Lewis-Base L_{N}.

Der entstehende stickstoffhaltige Phosphor(V)-Präkursor der Formel (I) ist ein einfach positiv geladenes Kation und kann mit einem geeigneten Gegenion isoliert werden.

Das Verfahren zur Synthese stickstoffhaltiger Phosphor(V)-Präkursoren der Formel (I) gemäß dem ersten Aspekt der vorliegenden Erfindung lässt sich demgemäß mittels der folgenden allgemeinen Reaktionsgleichung beschreiben:

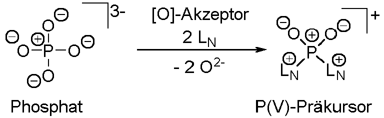

In der gezeigten Reaktionsgleichung ist das Phosphat Orthophosphat. Ein Phosphoratom wird zweifach desoxygeniert, das heißt, es wird formal zweimal ein Sauerstoffion (O²⁻) pro Phosphoratom eliminiert und vom Sauerstoffakzeptor aufgenommen. Die beiden freien Koordinationsstellen am Phosphoratom werden durch zwei Äquivalente der Lewis-Base L_{N} eingenommen unter Bildung des stickstoffhaltigen Phosphor(V)-Präkursors der Formel (I). Dabei erfolgt die Koordination der Lewis-Base L_{N} über das freie Elektronenpaar eines Stickstoffatoms unter Bildung von zwei Phosphor-Stickstoff-Bindungen.

Wird die Reaktion nicht mit Orthophosphat (entsprechend Hydrogenphosphat, Dihydrogenphosphat, oder Phosphorsäure), sondern mit Polyphosphaten oder Metaphosphaten durchgeführt, oder mit den aus diesen ableitbaren weiter kondensierten Phosphaten, die auch Kettenverzweigungen enthalten, bis hin zum polymeren Phosphorpentaoxid (P₂O₅)ₓ als formales Endprodukt der Kondensation (siehe Formel A; A. F. Holleman, E. Wiberg, Lehrbuch der Anorganischen Chemie, W. d. Gruyter, Berlin, 102. Auflage, 2007), oder mit Phosphorpentaoxid (P₄O₁₀) (siehe Formel B), muss die Stöchiometrie des Sauerstoffakzeptors entsprechend angepasst werden, da das O/P-Verhältnis von 4 beim Orthophosphat mit zunehmender Kondensation über die Poly- und Metaphosphate bis hin zum polymeren Phosphorpentaoxid (P₂O₅)ₓ auf 2.5 sinkt. Auch bei Phosphorpentaoxid (P₄O₁₀) beträgt das O/P-Verhältnis entsprechend 2.5.

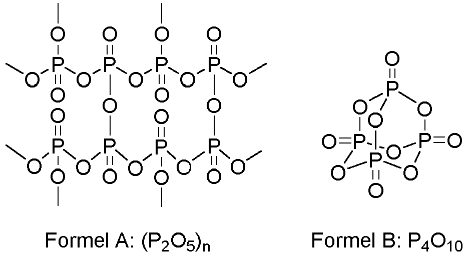

Der Begriff "Phosphat" wird in der Beschreibung der Erfindung und in den Patentansprüchen als Sammelbegriff verwendet, der alle Verbindungen beschreibt, in denen mindestens ein Phosphoratom der Oxidationsstufe +V enthalten ist, das an vier Sauerstoffatome kovalent gebunden ist, wobei die Verbindung geladen ist und nur aus Phosphoratomen und Sauerstoffatomen besteht. Phosphatester und Phosphorpentaoxid (P₄O₁₀) sind demgemäß von dem Begriff "Phosphat" gemäß der vorliegenden Erfindung nicht umfasst.

Der Begriff "Phosphat" umfasst demgemäß unter anderem das Orthophosphat (PO₄³⁻), die Oligophosphate und Polyphosphate (im Folgenden: Polyphosphate) wie Diphosphat (P₂O₇⁴⁻), Triphosphat (P₃O₁₀⁵⁻), etc., die Metaphosphate wie Trimetaphosphat (P₃O₉³⁻) und Tetrametaphosphat (P₄O₁₂⁴⁻), etc., sowie die oben genannten weiter kondensierten Phosphate.

Dem Fachmann ist bekannt, dass Phosphate geladene Spezies sind und daher als Edukte nicht in Frage kommen, wohl aber Phosphatsalze und die durch (teilweise) Protonierung erhältlichen Säuren.

In der Beschreibung der Erfindung und in den Patentansprüchen wird daher der Begriff "Phosphat-Verbindung" verwendet. Dieser Begriff beschreibt alle Salze und die durch (teilweise) Protonierung erhältlichen Säuren der unter den oben definierten Sammelbegriff "Phosphat" fallenden Phosphate, aber auch Phosphorpentaoxid (P₄O₁₀).

Demgemäß wird das Salz eines vollständig deprotonierten Phosphats, wie Orthophosphat, hier als Salz verstanden, die durch teilweise Protonierung erhältlichen Säuren, wie Hydrogenphosphat und Dihydrogenphosphat, als Säure verstanden, aber auch als Salz, da diese Säuren geladen sind, und die durch vollständige Protonierung erhältlichen Säuren, wie Phosphorsäure, lediglich als Säuren verstanden.

Als Edukte für die Synthese stickstoffhaltiger Phosphor(V)-Präkursoren gemäß dem ersten Aspekt der vorliegenden Erfindung kommen als Phosphat-Verbindungen demnach verschiedene Ressourcen in Frage, die Orthophosphat enthalten, wie Apatit, Struvit ((NH₄)Mg(PO₄)·6 H₂O), Eisenphosphat (FePO₄) oder Lithiumeisenphosphat (LiFePO₄), sowie Chemikalien wie Phosphorsäure (H₃PO₄), Natriumphosphat (Na₃PO₄), Kaliumphosphat (K₃PO₄), oder Phosphorpentaoxid (P₄O₁₀).

Struvit fällt neben dem mineralischen Vorkommen bei der Abwasserreinigung und der Gülleaufbereitung an. Lithiumeisenphosphat wird als Kathodenmaterial in Lithiumeisenphosphat-Akkumulatoren eingesetzt. Auch Eisenphosphat kann aus der Batterieherstellung zurückgewonnen werden. Durch die Möglichkeit, auch diese sekundären Phosphorressourcen einzusetzen, kann die Erfindung auch einen Beitrag zur Schonung der primären Phosphorressourcen leisten.

Ebenso können neben Orthophosphaten und Phosphorsäure die Kondensate als Edukte eingesetzt werden, wie die Säuren und Salze der Polyphosphate (z.B. Diphosphat, Triphosphat etc.) und die Säuren und Salze der Metaphosphate (z.B. Trimetaphosphat und Tetrametaphosphat etc.), z.B. Natriumtrimetaphosphat (Na₃P₃O₉). Es ist lediglich eine Anpassung der Stöchiometrie nötig.

Die Phosphat-Verbindung ist demgemäß ausgewählt aus der Gruppe bestehend aus Salzen und Säuren des Orthophosphats (PO₄³⁻), Salzen und Säuren der Polyphosphate (PₘO₃ₘ₊₁^{(m+2)-}), Salzen und Säuren der Metaphosphate ((PO₃⁻)ₙ), Salzen und Säuren der oben genannten weiter kondensierten Phosphate, Phosphorpentaoxid (P₄O₁₀), und deren Mischungen.

Bevorzugte Gegenionen der genannten Salze sind ausgewählt aus der Gruppe bestehend aus dem Ammoniumion, sowie aus den einwertigen Kationen von Lithium, Natrium, Kalium, den zweiwertigen Kationen von Magnesium, Calcium und Eisen, dem dreiwertigen Kation von Eisen, und deren Mischungen. Die Salze können auch Hydroxidionen, Fluoridionen und/oder Chloridionen enthalten.

Es ist weiterhin bevorzugt, dass gilt: m = 2 bis 10000, weiterhin bevorzugt m = 2 bis 5000, weiterhin bevorzugt m = 2 bis 3000, weiterhin bevorzugt m = 2 bis 1000, weiterhin bevorzugt m = 2 bis 50.

Es ist weiterhin bevorzugt, dass gilt: n = 3 bis 10, weiterhin bevorzugt n = 3 bis 7, weiterhin bevorzugt n = 3 bis 5, weiterhin bevorzugt n = 3 oder 4.

In der Gruppe der Salze und Säuren des Orthophosphats sind insbesondere bevorzugt Phosphorsäure (H₃PO₄), Apatit (Ca₅(PO₄)₃(F, OH, CI)), Struvit ((NH₄)Mg(PO₄)·6 H₂O), Eisenphosphat (FePO₄), Lithiumeisenphosphat (LiFePO₄), Natriumphosphat (Na₃PO₄), Kaliumphosphat (K₃PO₄), Ammoniumphosphat ((NH₄)₃PO₄), Natriumhydrogenphosphat (Na₂HPO₄), Natriumdihydrogenphosphat (NaH₂PO₄), Kaliumhydrogenphosphat (K₂HPO₄), Kaliumdihydrogenphosphat (NaH₂PO₄), Ammoniumhydrogenphosphat ((NH₄)₂HPO₄), und Ammoniumdihydrogenphosphat (NH₄H₂PO₄).

In der Gruppe der Salze und Säuren der Polyphosphate sind insbesondere bevorzugt Natriumpolyphosphate, Kaliumpolyphosphate, Magnesiumpolyphosphate und Calciumpolyphosphate.

In der Gruppe der Salze und Säuren der Metaphosphate sind insbesondere bevorzugt Natriummetaphosphate und Kaliummetaphosphate, wie Natriumtrimetaphosphat (Na₃P₃O₉).

Die am meisten bevorzugte Phosphat-Verbindung gemäß der vorliegenden Erfindung ist Phosphorsäure (H₃PO₄).

Wie oben definiert, wird das Phosphoratom des Orthophosphats zweifach desoxygeniert und die beiden freien Koordinationsstellen am Phosphoratom werden durch zwei Äquivalente der Lewis-Base L_{N} eingenommen unter Bildung des stickstoffhaltigen Phosphor(V)-Präkursors der Formel (I). Daraus ergibt sich, dass die Phosphat-Verbindung (hier: Salze und Säuren des Orthophosphats) mit mindestens zwei Äquivalenten eines Sulfonsäureanhydrids gemäß der Formel (III) in Gegenwart von mindestens zwei Äquivalenten einer Lewis-Base L_{N} zur Reaktion gebracht werden muss oder alternativ die Phosphat-Verbindung mit mindestens zwei Äquivalenten des Reaktionsprodukts gemäß Formel (IV) zur Reaktion gebracht werden muss.

Die jeweiligen Äquivalente beziehen sich dabei auf die Äquivalentmenge der Phosphoratome in der Phosphat-Verbindung. Die Stoffmenge der Reaktionspartner muss selbstverständlich an die Menge der Phosphoratome der Phosphat-Verbindung angepasst werden.

Basiert die Phosphat-Verbindung auf einem formal oder tatsächlich durch Kondensation von Orthophosphat erhältlichen Phosphat, wie zum Beispiel die Polyphosphate, die Metaphosphate, oder die oben genannten weiter kondensierten Phosphate, oder ist die Phosphat-Verbindung Phosphorpentaoxid, muss die Stöchiometrie des Sauerstoffakzeptors entsprechend angepasst werden.

Das Sulfonsäureanhydrid wird üblicherweise in mindestens einem halben Äquivalent zugesetzt und höchstens in zehn Äquivalenten.

Die Lewis-Base L_{N} wird üblicherweise in mindestens zwei Äquivalenten zugesetzt und höchstens in zehn Äquivalenten. Bei Verwendung eines Lösemittels, das der Definition einer Lewis-Base L_{N} entspricht, wobei keine zusätzliche Lewis-Base L_{N} eingesetzt wird, ist die Äquivalentmenge der Lewis-Base L_{N} selbstverständlich höher, üblicherweise höchstens 100 Äquivalente

In der alternativen Variante wird das Reaktionsprodukt gemäß der Formel (IV) üblicherweise in mindestens zwei Äquivalenten zugesetzt und höchstens in zehn Äquivalenten.

Wie schon weiter oben erwähnt, ist der Rest R des Sulfonsäureanhydrids der Formel (III) (und dementsprechend der Rest R in den Formeln (II) und (IV)) ein aliphatischer oder aromatischer Kohlenwasserstoffrest, der Heteroatome enthalten kann, wobei die Anzahl der Kohlenstoffatome von 1 bis 21 ist, und die Heteroatome - falls vorhanden - ausgewählt sind aus der Gruppe bestehend aus Sauerstoff, Stickstoff, Fluor, Chlor, Brom, lod, und deren Mischungen. Außer diesen genannten Heteroatomen enthält der Rest R keine weiteren Heteroatome.

Bevorzugt sind die Heteroatome - falls vorhanden - ausgewählt sind aus der Gruppe bestehend aus Sauerstoff, Stickstoff, Fluor, Chlor, Brom, und lod, das heißt, der Rest R enthält nicht Heteroatome unterschiedlicher Ordnungszahl.

Bevorzugt ist die Anzahl der Heteroatome im Rest R nicht höher als drei.

Für den Fall, dass R ein aliphatischer Kohlenwasserstoffrest ist, ist die Anzahl der Kohlenstoffatome bevorzugt von 1 bis 11, weiterhin bevorzugt von 1 bis 6. Unabhängig davon ist weiterhin bevorzugt, dass Heteroatome - falls vorhanden - ausgewählt sind aus der Gruppe bestehend aus Sauerstoff, Stickstoff und Fluor, und deren Mischungen, und besonders bevorzugt, dass Heteroatome - falls vorhanden - ausgewählt sind aus der Gruppe bestehend aus Sauerstoff, Stickstoff und Fluor, das heißt, der Rest R enthält nicht Heteroatome unterschiedlicher Ordnungszahl. In diesem Zusammenhang ist es besonders bevorzugt, dass der Rest R ausgewählt ist aus der Gruppe bestehend aus C₁-C₆-Alkyl, Cyclohexyl, C₁-C₆-Alkoxy, Trifluormethoxy, Trifluormethyl, C₂F₅, C₂F₄H, C₃F₇, C₃F₆H, C₄F₉, C₄F₈H, C₅F₁₁ und C₅F₁₀H. Der in diesem Zusammenhang am meisten bevorzugte aliphatische Kohlenwasserstoffrest R ist Trifluormethyl (CF₃).

Für den Fall, dass R ein aromatischer Kohlenwasserstoffrest ist, ist R bevorzugt definiert durch die folgende Formel (IIIa): 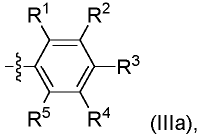 wobei die Reste R¹, R², R³, R⁴, und R⁵ unabhängig voneinander ausgewählt sind aus der Gruppe bestehend aus Wasserstoff, C₁-C₃-Alkyl, C₁-C₃-Alkoxy, Fluor, Chlor, Brom, lod, der Nitrogruppe, und Trifluormethyl. In diesem Zusammenhang sind besonders bevorzugt die Reste R¹, R², R³, R⁴, und R⁵ unabhängig voneinander ausgewählt aus der Gruppe bestehend aus Wasserstoff, Methyl, Methoxy, Fluor, Chlor, der Nitrogruppe, und Trifluormethyl. In dieser bevorzugten Gruppe sind die Reste R¹, R², R³, R⁴, und R⁵ weiterhin bevorzugt aus den folgenden Kombinationen ausgewählt:
R¹, R², R³, R⁴, R⁵ = H,
R¹, R², R³, R⁴, R⁵ = CH₃,
R¹, R², R³, R⁴ = H und R⁵ = CH₃,
R¹, R², R³, R⁴ = H und R⁵ = F,
R¹, R², R³, R⁴ = H und R⁵ = Cl,
R¹, R², R³, R⁴ = H und R⁵ = OCH₃,
R¹, R², R³, R⁴ = H und R⁵ = NO₂,
R¹, R², R³, R⁴ = H und R⁵ = CF₃,
R¹, R², R⁴ = H und R³, R⁵ = CH₃,
R², R⁴ = H und R¹, R³, R⁵ = CH₃,
R², R³, R⁵ = H und R¹, R⁴ = CH₃, oder
R¹, R², R⁴, R⁵ = H und R³ = CH₃.
Die in diesem Zusammenhang am meisten bevorzugte Kombination ist:
R¹, R², R⁴, R⁵ = H und R³ = CH₃.

Das am meisten bevorzugte Sulfonsäureanhydrid der Formel (III) mit einem aliphatischen Kohlenwasserstoffrest R ist demgemäß Trifluormethansulfonsäureanhydrid (Tf₂O) und dementsprechend ist das am meisten bevorzugte Kation eines Sulfonsäureanhydrids gemäß der Formel (II) mit einem aliphatischen Kohlenwasserstoffrest R das Triflylkation F₃CSO₂⁺ (Tf⁺).

Das am meisten bevorzugte Sulfonsäureanhydrid der Formel (III) mit einem aromatischen Kohlenwasserstoffrest R ist demgemäß *p*-Toluolsulfonsäureanhydrid und dementsprechend ist das am meisten bevorzugte Kation eines Sulfonsäureanhydrids gemäß der Formel (II) mit einem aromatischen Kohlenwasserstoffrest R das Tosylkation H₃C-C₆H₄-SO₂⁺ (Ts⁺).

Das am meisten bevorzugte Sulfonsäureanhydrid der Formel (III) ist Trifluormethansulfonsäureanhydrid (Tf₂O) und dementsprechend ist das am meisten bevorzugte Kation eines Sulfonsäureanhydrids gemäß der Formel (II) das Triflylkation F₃CSO₂⁺ (Tf⁺).

Im am meisten bevorzugten Verfahren gemäß dem ersten Aspekt der vorliegenden Erfindung desoxygenieren demgemäß zwei Äquivalente Triflylkation ein Phosphoratom der Phosphat-Verbindung zweifach unter Bildung von zwei Äquivalenten Trifluormethansulfonat (Triflat, OTf⁻).

Das Triflylkation ist daher der am meisten bevorzugte Sauerstoffakzeptor im Verfahren gemäß dem ersten Aspekt der vorliegenden Erfindung.

Das Triflylkation kann im Verfahren in Form des Trifluormethansulfonsäureanhydrids eingesetzt werden.

Alternativ zur Verwendung von Trifluormethansulfonsäureanhydrid kann zuvor Trifluormethansulfonsäureanhydrid, Tf₂O, mit der Lewis-Base L_{N} umgesetzt werden. Das Reaktionsprodukt enthält das Triflylkation an die Lewis-Base L_{N} gebunden als Salz des Triflatanions, OTf⁻:

Tf₂O + L_{N} → L_{N⁻}Tf[OTTf]

Das Reaktionsschema der besonders bevorzugten Ausführungsform unter Verwendung von Trifluormethansulfonsäureanhydrid ist im Folgenden gezeigt:

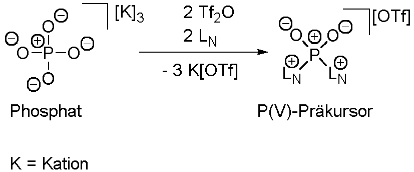

Das Reaktionsschema der alternativen besonders bevorzugten Ausführungsform unter Verwendung von [L_{N}-Tf][OTf] ist im Folgenden gezeigt:

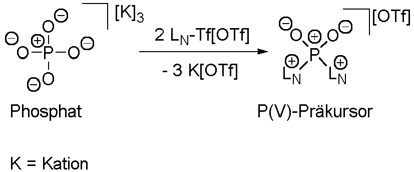

Wie schon weiter oben erwähnt, ist die Lewis-Base L_{N} zur Koordination über ein Stickstoffatom fähig, und ist eine stickstoffhaltige heteroaromatische Verbindung, die einen, das heißt mindestens einen, sechsgliedrigen heteroaromatischen Ring enthält, der ein, das heißt mindestens ein, zur Koordination fähiges Stickstoffatom enthält, und wobei die Anzahl der Kohlenstoffatome der Lewis-Base L_{N} von 4 bis 19 ist.

Die Lewis-Base L_{N} kann weitere Heteroatome enthalten, die ausgewählt sind aus der Liste bestehend aus Stickstoff, Sauerstoff, Schwefel, Fluor, Chlor, Brom, lod, und deren Mischungen. Außer den genannten Heteroatomen enthält die Lewis-Base L_{N} keine weiteren Heteroatome.

Die Lewis-Base L_{N} enthält bevorzugt einen oder zwei der genannten sechsgliedrigen heteroaromatischen Ringe.

Die Lewis-Base L_{N} enthält bevorzugt ein oder zwei Stickstoffatome.

Bevorzugt enthält die Lewis-Base L_{N} einen oder zwei sechsgliedrige heteroaromatische Ringe und die Lewis-Base L_{N} enthält pro sechsgliedrigem heteroaromatischen Ring im sechsgliedrigen heteroaromatischen Ring ein oder zwei zur Koordination fähige Stickstoffatome und die Lewis-Base L_{N} enthält insgesamt ein oder zwei Stickstoffatome.

Die Lewis-Base L_{N} enthält - falls Sauerstoffatome vorhanden sind - bevorzugt ein oder zwei Sauerstoffatome.

Die Sauerstoffatome der Lewis-Base L_{N} sind - falls vorhanden - weiterhin bevorzugt Bestandteil von Methoxy- oder Ethoxygruppen.

Die Lewis-Base L_{N} enthält bevorzugt nicht mehr als zwei Methoxy- oder Ethoxygruppen.

Die Lewis-Base L_{N} enthält - falls diese Heteroatome vorhanden sind - bevorzugt ein, zwei, drei oder vier Heteroatome, die ausgewählt sind aus der Gruppe bestehend aus Fluor, Chlor, Brom, lod, und deren Mischungen.

Die Lewis-Base L_{N} enthält - falls diese Heteroatome vorhanden sind - bevorzugt ein, zwei, drei oder vier Heteroatome, die ausgewählt sind aus der Gruppe bestehend aus Fluor, Chlor, Brom, lod, das heißt, dass die Lewis-Base L_{N} nicht Heteroatome dieser Gruppe mit unterschiedlicher Ordnungszahl enthält.

Die Lewis-Base L_{N} enthält bevorzugt keinen Schwefel.

Die Lewis-Base L_{N} enthält besonders bevorzugt unabhängig voneinander ein oder zwei Stickstoffatome, null, ein oder zwei Sauerstoffatome, null, ein, zwei, drei oder vier Heteroatome, die ausgewählt sind aus der Gruppe bestehend aus Fluor, Chlor, Brom, und lod, und enthält darüber hinaus keine weiteren Heteroatome.

Die Lewis-Base L_{N} ist bevorzugt ausgewählt aus der Gruppe bestehend aus Pyridinen, Picolinen, Lutidinen, Collidinen, Bipyridinen, Pyridazinen, Pyrimidinen, Pyrazinen, Chinolinen und Isochinolinen.

Die Lewis-Base L_{N} ist weiterhin bevorzugt ausgewählt aus den folgenden Substanzen bzw. Substanzklassen:
Pyridin, einfach oder mehrfach methyl-substituierte Pyridine wie Pentamethylpyridin, Picoline, Lutidine, und Collidine, einfach alkyl-substituierte Pyridine, wobei der Alkylrest zwischen 2 und 10 Kohlenstoffatome enthält, einfach phenyl-substituierte Pyridine, Aminopyridine, Dimethylaminopyridine, einfach oder zweifach methoxy- oder ethoxysubstituierte Pyridine, sowie einfach, zweifach oder dreifach halogen-substituierte Pyridine.

Bipyridin, einfach methyl-substituierte Bipyridine, einfach halogen-substituierte Bipyridine, zweifach methyl-substituierte Bipyridine, zweifach halogen-substituierte Bipyridine, vierfach methyl-substituierte Bipyridine, sowie vierfach halogen-substituierte Bipyridine.

Diazine wie Pyridazin, Pyrimidin und Pyrazin, einfach methyl-substituierte Pyridazine, einfach halogen-substituierte Pyridazine, zweifach methyl-substituierte Pyridazine, zweifach halogen-substituierte Pyridazine, dreifach methyl-substituierte Pyridazine, dreifach halogen-substituierte Pyridazine, vierfach methyl-substituiertes Pyridazin, vierfach halogen-substituiertes Pyridazin, einfach methyl-substituierte Pyrimidine, einfach halogen-substituierte Pyrimidine, zweifach methyl-substituierte Pyrimidine, zweifach halogen-substituierte Pyrimidine, dreifach methyl-substituierte Pyrimidine, dreifach halogen-substituierte Pyrimidine, vierfach methyl-substituiertes Pyrimidin, vierfach halogen-substituiertes Pyrimidin, einfach methyl-substituierte Pyrazine, einfach halogen-substituierte Pyrazine, zweifach methyl-substituierte Pyrazine, zweifach halogen-substituierte Pyrazine, dreifach methyl-substituierte Pyrazine, dreifach halogen-substituierte Pyrazine, vierfach methyl-substituiertes Pyrazin, sowie vierfach halogen-substituiertes Pyrazin,
Chinoline wie Chinolin, einfach methyl-substituierte Chinoline, zweifach methyl-substituierte Chinoline, dreifach methyl-substituierte Chinoline, vierfach methyl-substituierte Chinoline, einfach halogen-substituierte Chinoline, wobei gleichzeitig Substitution mit ein bis sechs Methylgruppen vorliegen kann, sowie siebenfach methyl-substituiertes Chinolin.

Isochinoline wie Isochinolin, einfach methyl-substituierte Isochinoline, zweifach methyl-substituierte Isochinoline, einfach halogen-substituierte Isochinoline, wobei gleichzeitig Substitution mit ein bis sechs Methylgruppen vorliegen kann, sowie siebenfach methyl-substituiertes Isochinolin.

Die Anzahl der Kohlenstoffatome der Lewis-Base L_{N} ist bevorzugt von 4 bis 16, weiterhin bevorzugt von 4 bis 12, besonders bevorzugt von 5 bis 9.

Die Lewis-Base L_{N} enthält weiterhin bevorzugt ein oder zwei Stickstoffatome und keine weiteren Heteroatome.

Gemäß einer besonders bevorzugten Ausführungsform der vorliegenden Erfindung ist die Lewis-Base L_{N} ausgewählt aus der Gruppe bestehend aus Pyridin, 4-Dimethylaminopyridin, und deren Mischungen.

Die Lewis-Base L_{N} kann sich auch erst während der Reaktion bilden, wenn wie oben beschrieben vor Durchführung des Verfahrens gemäß dem ersten Aspekt der vorliegenden Erfindung die Lewis-Base L_{N} mit einem Sulfonsäureanhydrid wie am meisten bevorzugt Trifluormethansulfonsäureanhydrid, Tf₂O, umgesetzt wird. Das Reaktionsprodukt ist in dieser Alternative [L_{N}-Tf][OTf], das dann in dem Verfahren gemäß dem ersten Aspekt der vorliegenden Erfindung eingesetzt wird. Sobald der Sauerstoffakzeptor, das Triflylkation, Tf⁺, unter Bildung des Triflatanions, OTf⁻, reagiert, wird L_{N} freigesetzt und kann an das Phosphoratom der Phosphat-Verbindung binden. Die Umsetzung der Phosphat-Verbindung mit dem Sauerstoffakzeptor erfolgt insofern auch in dieser Alternative in Gegenwart einer Lewis-Base L_{N}.

Das Verfahren gemäß dem ersten Aspekt der vorliegenden Erfindung kann in Lösung, in der Schmelze, oder als Feststoffreaktion durchgeführt werden.

Im Verfahren gemäß dem ersten Aspekt der vorliegenden Erfindung erfolgt die Synthese besonders bevorzugt in einem aprotischen Lösemittel.

Weiterhin besonders bevorzugt ist, dass im Verfahren gemäß dem ersten Aspekt der vorliegenden Erfindung außer der Lewis-Base L_{N} keine weiteren Lewis-Basen oder Nucleophile zugesetzt werden. Als weitere Lewis-Basen oder Nucleophile werden hier Substanzen verstanden, die von der oben definierten Lewis-Base L_{N} verschieden sind. Diese weiteren Lewis-Basen oder Nucleophile könnten mit der oben definierten Lewis-Base L_{N} in Konkurrenz um die Bindung zum Phosphoratom der Phosphat-Verbindung treten und damit die Bildung des stickstoffhaltigen Phosphor(V)-Präkursors der Formel (I) erschweren, verhindern bzw. dessen Ausbeute reduzieren durch die Bildung von Gemischen.

Der Fachmann kennt in diesem Zusammenhang das Erfordernis, weitere Lewis-Basen oder Nucleophile von der Reaktion auszuschließen von ähnlichen Reaktionen aus dem Stand der Technik. Insbesondere wird der Fachmann zum Beispiel folgende Substanzen von der Reaktion ausschließen: Wasser, Alkohole, Ammoniak, Amine, Imine, Azole, Pyrroline, Sulfide, Halogenide und metallorganische Reagenzien.

Weiterhin bevorzugt ist das Lösemittel definiert wie die Lewis-Base L_{N}, wobei für das Lösemittel zusätzlich gilt, dass dessen Schmelzpunkt unterhalb 20 °C ist (bei Normaldruck entsprechend 101325 Pa).

Als Lösemittel besonders bevorzugt ist Pyridin.

Im Falle einer Feststoffreaktion wird bevorzugt die Reaktion unter erhöhter Temperatur durchgeführt, bevorzugt oberhalb 100 °C. Die Temperatur wird üblicherweise unterhalb 200 °C liegen.

Gemäß einer besonders bevorzugten Ausführungsform des Verfahrens gemäß dem ersten Aspekt der vorliegenden Erfindung ist die Phosphat-Verbindung ausgewählt aus der Gruppe bestehend aus Salzen und Säuren des Orthophosphats, und deren Mischungen, ist das Sulfonsäureanhydrid gemäß Formel (III) Trifluormethansulfonsäureanhydrid, und ist die Lewis-Base L_{N} ausgewählt aus der Gruppe bestehend aus Pyridin, 4-Dimethylaminopyridin, und deren Mischungen.

Gemäß einer weiteren besonders bevorzugten Ausführungsform des Verfahrens gemäß dem ersten Aspekt der vorliegenden Erfindung ist die Phosphat-Verbindung Phosphorsäure (H₃PO₄), ist das Sulfonsäureanhydrid gemäß Formel (III) Trifluormethansulfonsäureanhydrid, und ist die Lewis-Base L_{N} ausgewählt aus der Gruppe bestehend aus Pyridin, 4-Dimethylaminopyridin, und deren Mischungen.

Gemäß einer weiteren besonders bevorzugten Ausführungsform des Verfahrens gemäß dem ersten Aspekt der vorliegenden Erfindung ist die Phosphat-Verbindung Phosphorsäure (H₃PO₄), ist das Sulfonsäureanhydrid gemäß Formel (III) Trifluormethansulfonsäureanhydrid, ist die Lewis-Base L_{N} Pyridin oder 4-Dimethylaminopyridin, und wird die Synthese in Pyridin als Lösemittel durchgeführt.

Wenn Pyridin als am meisten bevorzugtes Lösemittel im Verfahren gemäß dem ersten Aspekt der vorliegenden Erfindung verwendet wird, fungiert es automatisch auch als Lewis-Base L_{N}. Wird das Verfahren allerdings mit Pyridin als Lösemittel in Gegenwart von 4-Dimethylaminopyridin als Lewis-Base L_{N} durchgeführt, enthält der stickstoffhaltige Phosphor(V)-Präkursor der Formel (I) zwei Äquivalente 4-Dimethylaminopyridin.

Bei Verwendung von Trifluormethansulfonsäureanhydrid als Sulfonsäureanhydrid gemäß Formel (III), von Pyridin oder 4-Dimethylaminopyridin als Lewis-Base L_{N} und von Pyridin als Lösemittel, fällt das Kation der Formel (I) mit Triflat, OTf⁻, als Gegenion aus der Lösung aus und kann in üblicher Weise isoliert und gewaschen werden.

Die vorliegende Erfindung ist in einem zweiten Aspekt auf ein Verfahren zur Synthese von Oxyphosphorverbindungen gerichtet, wobei das Verfahren die folgenden Schritte in der angegebenen Reihenfolge umfasst:
c) Synthese eines stickstoffhaltigen Phosphor(V)-Präkursors der Formel (I) gemäß dem ersten Aspekt der vorliegenden Erfindung; 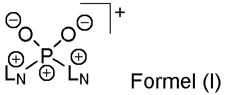
d) Umsetzung des stickstoffhaltigen Phosphor(V)-Präkursors der Formel (I) mit einem Nucleophil.

Der Fachmann kennt den Begriff Nucleophil. Im Verfahren gemäß dem zweiten Aspekt der vorliegenden Erfindung kann jedes beliebige Nucleophil eingesetzt werden.

Das Nucleophil ist bevorzugt ausgewählt ist aus der Gruppe bestehend aus Alkoholen, Ammoniak, primären Aminen, sekundären Aminen, tertiären Aminen, Azolen, metallorganischen Verbindungen und Fluorid. Fluorid kann in üblicher Weise als Metallfluorid eingesetzt werden, wie Cäsiumfluorid. Als Nucleophil kann darüber hinaus jede der weiter oben im Zusammenhang mit dem ersten Aspekt der vorliegenden Erfindung als Lewis-Base L_{N} beschriebenen Verbindungen Verwendung finden.

Dem Fachmann ist bekannt, dass bei derartigen Reaktionen eines Nucleophils dieses gegebenenfalls auch in der deprotonierten Variante eingesetzt werden kann. Im Fall der Alkohole sind das die Alkoholate, die in üblicher Weise als Metallalkoholate eingesetzt werden können.

Bezüglich geeigneter und bevorzugter Verbindungen, die als Phosphat-Verbindung, als Sulfonsäureanhydrid gemäß Formel (III), als Lewis-Base L_{N}, und als Lösemittel im obigen Schritt c) des Verfahrens gemäß dem zweiten Aspekt der vorliegenden Erfindung Verwendung finden können, wird auf die entsprechenden Ausführungen im Zusammenhang mit dem ersten Aspekt der vorliegenden Erfindung verwiesen. Das Gleiche gilt für geeignete und bevorzugte Reaktionsbedingungen.

Der stickstoffhaltige Phosphor(V)-Präkursors der Formel (I) gemäß dem ersten Aspekt der vorliegenden Erfindung kann isoliert werden und dann im Schritt d) des Verfahrens gemäß dem zweiten Aspekt der vorliegenden Erfindung eingesetzt werden.

Der Schritt d) des Verfahrens gemäß dem zweiten Aspekt der vorliegenden Erfindung erfolgt bevorzugt in Lösung bzw. in Suspension der Reaktionspartner in einem nicht-wässrigen Lösemittel. Geeignete Nucleophile können ebenfalls als Lösemittel verwendet werden. Typische Lösemittel sind alle gängigen organischen Lösemittel (z.B. Acetonitril, Nitromethan, Tetrahydrofuran, Pyridin, Dichlormethan) und deren Mischungen. Dem Fachmann ist bekannt, welche weiteren Lösemittel grundsätzlich verwendet werden können und wird für jedes Reaktandenpaar aus stickstoffhaltigem Phosphor(V)-Präkursor der Formel (I) und Nucleophil ein geeignetes Lösemittel ermitteln können. Das Auffinden eines geeigneten Lösemittels gehört zum grundlegenden Fachwissen eines Fachmanns auf dem Gebiet der präparativen Chemie.

Ein Nucleophil, das als Lösemittel eingesetzt werden kann, ist zum Beispiel 2-Ethylhexanol.

Alternativ zur Isolierung des stickstoffhaltigen Phosphor(V)-Präkursors der Formel (I) gemäß dem ersten Aspekt der vorliegenden Erfindung, kann das Nucleophil gemäß Schritt d) des Verfahrens gemäß dem zweiten Aspekt der vorliegenden Erfindung auch zu der Reaktionsmischung aus Schritt b) des Verfahrens gemäß dem ersten Aspekt der vorliegenden Erfindung gegeben werden.

In diesem Fall erfolgen beide Reaktionen in ein und demselben Reaktionsgefäß. Allerdings muss abgewartet werden, bis die Synthese des stickstoffhaltigen Phosphor(V)-Präkursors der Formel (I) abgeschlossen ist, d.h. bis sich das Gleichgewicht der Reaktion eingestellt hat oder nicht mehr verändert. Der Fachmann weiß, wie er diesen Zeitpunkt durch geeignete Analytik, wie NMR-Spektroskopie der Reaktionslösung, bestimmen kann.

Im Falle einer besonders bevorzugten Ausführungsform des Verfahrens gemäß dem ersten Aspekt der vorliegenden Erfindung wird die Reaktion in Pyridin als Lösemittel durchgeführt, ist das Sulfonsäureanhydrid gemäß der Formel (III) Trifluormethansulfonsäureanhydrid, und ist die Lewis-Base L_{N} entweder das Lösemittel Pyridin oder es wird als Lewis-Base L_{N} zusätzlich 4-Dimethylaminopyridin zugegeben. In dieser besonders bevorzugten Ausführungsform fällt das Produkt, das Salz aus dem Kation der Formel (I) mit Triflat, OTf⁻, als Gegenion aus der Lösung aus. Es lässt sich daher der Reaktionsfortschritt schon an der Trübung der Lösung erkennen. In einer sogenannten Eintopfreaktion, kann das Nucleophil zu dieser Suspension gegeben werden.

Je nachdem, ob das Nucleophil vor der Reaktion oder während der Reaktion noch deprotoniert wird oder nicht, kann das entstehende Produkt ein Anion oder ein Kation sein, das mit einem geeigneten Gegenion aus der Reaktionslösung isoliert und in üblicher Weise gereinigt werden kann.

Wenn das Nucleophil ein Alkohol bzw. ein Alkoholat ist, lässt sich die Reaktion gemäß dem zweiten Aspekt der vorliegenden Erfindung wie folgt veranschaulichen:

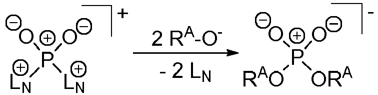

Auf diese Weise sind die entsprechenden Diester der Phosphorsäure einfach zugänglich. Im Gegensatz zur klassischen Synthese aus Phosphorpentaoxid und Alkohol entstehen selektiv die Diester und es ist daher keine Abtrennung der Monoester und Triester aus einem Produktgemisch nötig. Als Nucleophil ist grundsätzlich jeder Alkohol bzw. jedes Alkoholat geeignet.

Der Rest R^{A} ist ein Kohlenwasserstoffrest, der Heteroatome enthalten kann. Zwei Reste R^{A} können dabei gemeinsam eine Brücke zwischen zwei Hydroxylgruppen bilden und der Alkohol demgemäß als verbrückender Chelatligand an das Phosphoratom binden.

Bevorzugt ist die Anzahl der Kohlenstoffatome von R^{A} zwischen 1 und 50 oder zwischen 1 und 25. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest R^{A} keine weiteren Heteroatome außer Sauerstoff, Stickstoff und Fluor, weiterhin bevorzugt keine weiteren Heteroatome.

Geeignete Alkohole sind neben einwertigen Alkoholen auch Diole, Polyole, Zuckeralkohole und Zucker, einschließlich Nukleoside.

Als Nucleophil kann zum Beispiel 2-Ethylhexanol eingesetzt werden. Die Umsetzung mit zwei Äquivalenten 2-Ethylhexanol ergibt auf einfache Weise das industriell bedeutsame Bis(2-ethylhexyl)phosphat (siehe: Datenblatt *Bis(2-ethylhexyl) phosphate, 95*% bei AlfaAesar, abgerufen am 25. März 2020 (PDF)). Ebenso industriell bedeutsam ist die Verwendung von 2,2,2-Trifluorethanol als Nucleophil zur analogen Synthese von Bis(2,2,2-trifluoroethyl)phosphat (siehe: a) A. Maruo, S. Yamazaki, Liquid Electrolyte comprising an alkalimetal salt of a phosphate compound, WO-A1-2013/002186; b) A. Garsuch, M. Schmidt, R. Schmitz, I. Krossing, P. Eiden, S., Reininger, Inorganic coordination polymers as gelling agents, WO 2015/128363 Al). Schließlich erlaubt das Verfahren gemäß der vorliegenden Erfindung die einfache Umsetzung von 1,1'-Bi-2-naphthol (BINOL) zum BINOL-Phosphat (siehe: D. Parmar, E. Sugiono, S. Raja, M. Rueping, Chem. Rev. 2014, 114, 9047).

Wenn das Nucleophil Ammoniak ist, lässt sich die Reaktion gemäß dem zweiten Aspekt der vorliegenden Erfindung wie folgt veranschaulichen:

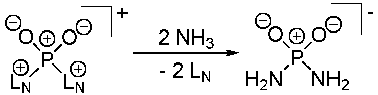

Auf diese Weise ist Diamidophosphat einfach zugänglich.

Wenn das Nucleophil ein primäres Amin ist, lässt sich die Reaktion gemäß dem zweiten Aspekt der vorliegenden Erfindung wie folgt veranschaulichen:

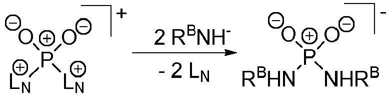

Auf diese Weise ist Diamidophosphat einfach zugänglich.

Als Nucleophil ist grundsätzlich jedes primäre Amin bzw. jedes primäre Amid geeignet.

Der Rest R^{B} ist ein Kohlenwasserstoffrest, der Heteroatome enthalten kann. Zwei Reste R^{B} können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von R^{B} zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest R^{B} keine weiteren Heteroatome außer Sauerstoff, Stickstoff und Fluor, weiterhin bevorzugt keine weiteren Heteroatome.

Wenn das Nucleophil ein sekundäres Amin ist, lässt sich die Reaktion gemäß dem zweiten Aspekt der vorliegenden Erfindung wie folgt veranschaulichen:

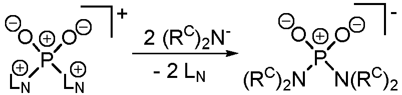

Auf diese Weise sind die entsprechenden Diamidophosphate einfach zugänglich.

Als Nucleophil ist grundsätzlich jedes sekundäre Amin bzw. jedes sekundäre Amid geeignet.

Der Rest R^{C} ist ein Kohlenwasserstoffrest, der Heteroatome enthalten kann. Zwei Reste R^{C} können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von R^{C} zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest R^{C} keine weiteren Heteroatome außer Sauerstoff, Stickstoff und Fluor, weiterhin bevorzugt keine weiteren Heteroatome.

Wenn das Nucleophil ein tertiäres Amin ist, lässt sich die Reaktion gemäß dem zweiten Aspekt der vorliegenden Erfindung wie folgt veranschaulichen:

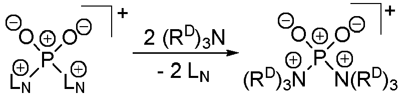

Auf diese Weise sind die entsprechenden Diamoniophosphate einfach zugänglich.

Als Nucleophil ist grundsätzlich jedes tertiäre Amin geeignet.

Der Rest R^{D} ist ein Kohlenwasserstoffrest, der Heteroatome enthalten kann. Zwei Reste R^{D} können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von R^{D} zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest R^{D} keine weiteren Heteroatome außer Sauerstoff, Stickstoff und Fluor, weiterhin bevorzugt keine weiteren Heteroatome.

Wenn das Nucleophil ein Azol ist, lässt sich die Reaktion gemäß dem zweiten Aspekt der vorliegenden Erfindung wie folgt veranschaulichen:

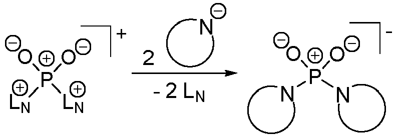

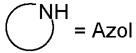

Auf diese Weise sind die entsprechenden Diamidophosphate einfach zugänglich.

Das Nuckleophil Azol ist bevorzugt ausgewählt aus der Gruppe bestehend aus Pyrrolen, Imidazolen, Pyrazolen, Triazolen und Tetrazolen.

Im Einzelnen sind hier zu nennen:
Pyrrole wie Pyrrol, einfach alkyl-substituierte Pyrrole, zweifach alkyl-substituierte Pyrrole, dreifach alkyl-substituierte Pyrrole, vierfach alkyl-substituierte Pyrrole;
Imidazole wie 1,3-Imidazol, einfach alkyl-substituierte Imidazole, zweifach alkyl-substituierte Imidazole, dreifach alkyl-substituierte Imidazole;
Pyrazole wie 1,2-Pyrazol, einfach alkyl-substituierte Pyrazole, zweifach alkyl-substituierte Pyrazole, dreifach alkyl-substituierte Pyrazole;
Triazole wie 1,2,3-Triazol, 1,2,4-Triazol, einfach alkyl-substituierte Triazole, zweifach alkyl-substituierte Triazole;
Tetrazole wie Tetrazol, einfach alkyl-substituierte Tetrazole,

Die Anzahl der Kohlenstoffatome der Azole ist bevorzugt von 4 bis 24.

Die Azole enthalten weiterhin bevorzugt ein bis vier Stickstoffatome und keine weiteren Heteroatome.

Wenn das Nucleophil eine metallorganische Verbindung ist, lässt sich die Reaktion gemäß dem zweiten Aspekt der vorliegenden Erfindung wie folgt veranschaulichen:

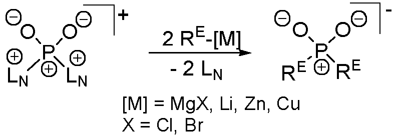

Auf diese Weise sind die entsprechenden Phosphinate einfach zugänglich.

Als Nucleophil ist grundsätzlich jede metallorganische Verbindung geeignet, in der das Kohlenstoffatom nucleophil reagiert. Hierzu zählen metallorganische Verbindung mit den Metallen, beispielsweise Lithium, Magnesium, Aluminium, Zink und Kupfer.

Der Rest R^{E} ist ein Kohlenwasserstoffrest, der Heteroatome enthalten kann. Zwei Reste R^{E} können dabei gemeinsam eine Brücke zwischen zwei Kohlenstoffatomen bilden und demgemäß als verbrückender Chelatligand an das Phosphoratom koordinieren.

Bevorzugt ist die Anzahl der Kohlenstoffatome von R^{E} zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest R^{E} keine weiteren Heteroatome, weiterhin bevorzugt keine weiteren Heteroatome.

### Experimenteller Teil

Alle Reaktionen wurden in getrockneter Inertgasatmosphäre (N₂ oder Ar) unter Nutzung einer Glovebox (*Innovative Technology Pure Lab HE, MBraun Unilab*) oder mittels Schlenk-Technik durchgeführt. Glasgeräte wurden vor der Benutzung bei 150 °C gelagert oder unter Vakuum mit einem Heißluftgebläse ausgeheizt. Mikrowellenreaktionen wurden in verschlossenen Glasröhrchen im Reaktor *CEM Discover* durchgeführt. Genutzte Lösungsmittel wurden zuvor mit geeigneten Trocknungsmitteln destilliert und über Molsieb gelagert. Die deuterierten Lösungsmittel CD₂Cl₂, CD₃CN, C₆D₆ und C₇D₈ wurden von Merck, Deutero oder Eurisotop bezogen und vor der Nutzung über Molsieb gelagert. Die wässrige Aufarbeitung wurde bei normalen Bedingungen (keine Verwendung von Inertgas) durchgeführt. Wässrige Lösungen (destilliertes H₂O, gesättigte NaCl-Lösung) wurden zuvor im Ultraschallbad entgast.

### ¹H-NMR, ¹³C-NMR, ³¹P-NMR, ¹⁹F-NMR

Kernspinresonanzexperimente wurden an den Geräten *AVANCE III HD Nanobay 400 MHz Ultrashield* (Resonanzfrequenzen: ¹H = 400.13 MHz, ¹³C = 100.61 MHz, ¹⁹F = 376.50 Hz, ³¹P = 161.98 MHz) oder *AVANCE III HDX 500 MHz Ascend* (Resonanzfrequenzen: ¹H = 500.13 MHz, ¹³C = 125.75 MHz, ¹⁹F = 470.59 MHz, ³¹P = 202.45 MHz) der Firma *Bruker* durchgeführt und mit der Software *Topspin* ausgewertet. Die Werte der chemischen Verschiebung δ beziehen sich auf die externen Standards Tetramethylsilan (¹H, ¹³C), Trichlorfluormethan (¹⁹F) oder Phosphorsäure 85 % (³¹P) und werden in ppm auf 1-2 Nachkommastellen gerundet angegeben. Skalare Kopplungen über n Bindungen ⁿ*J* werden in Hz auf 1-2 Nachkommastellen gerundet angegeben. ¹³C-NMR-Spektren wurden stets unter ¹H-Breitbandentkopplung gemessen. Für die Zuordnung der Signale wurden, wenn nötig, zusätzlich 2D-Korrelationsexperimente (HSQC, HMBC, HH-COSY, ¹H-³¹P-HMBC) durchgeführt. Zur Beschreibung der Multiplizität werden folgende Abkürzungen verwendet: s - Singulett, s(br) - breites Singulett, d - Dublett, t - Triplett, q - Quartett, m - Multiplett. Kombinationen dieser Abkürzungen werden stets in der Reihenfolge absteigender Kopplungskonstanten angegeben. Temperaturabhängige Messungen wurden unter Nutzung einer *BCU II* Temperatureinheit (120°C bis -40 °C) oder eines Stickstoffverdampfers (-50 °C bis - 100 °C) aufgenommen.

### Chemikalien

Chemikalien und Lösungsmittel wurden von Merck, VWR, Alfa Aesar, Acros Organics oder TCI bezogen. Trifluormethansulfonsäureanhydrid (Tf₂O) wurde von der Fa. Solvay gespendet.

### Abkürzungen

- BINOL: 1,1'-Bi-2-naphthol
- DMAP: 4-(Dimethylamino)pyridin
- HOTf: Trifluormethansulfonsäure
- KOtBu: Kalium-tert-butanolat
- MeOH: Methanol
- OTf⁻: Trifluormethansulfonat
- PhMgBr: Phenylmagnesiumbromid
- PhOH: Phenol
- Pyr: Pyridin
- Tf⁺: Triflatkation
- Tf₂O: Trifluormethansulfonsäureanhydrid
- THF: Tetrahydrofuran
- 4-Me-Pyr: 4-Methylpyridin

### Beispiele

### Beispiel 1: Synthese von (L_{N})₂PO₂[OTf] (L_{N} = Pyridiniumyl) aus H₃PO₄

Reine Phosphorsäure (610 mg, 6.22 mmol) wird in Pyridin (8 ml) vorgelegt und auf -30 °C gekühlt. Dazu wird kaltes (-30 °C) Trifluormethansulfonsäureanhydrid (Tf₂O; 3.86 g, 13.7 mmol) langsam hinzu getropft. Die Reaktionslösung färbt sich orange-braun und es bildet sich ein farbloser, klebriger Feststoff, welcher sich im Verlauf der Reaktion langsam auflöst. Nach 15 min bildet sich ein farbloser Niederschlag. Die Reaktionsmischung wird anschließend für 12 h bei 40 °C gerührt. Der Feststoff wird über eine Glasfritte filtriert, mit Pyridin (2 x 6 ml) gewaschen und anschließend im Vakuum getrocknet. Das Produkt wird als farbloser Feststoff in quantitativer Ausbeute [2.32 g; (>99%)] erhalten.

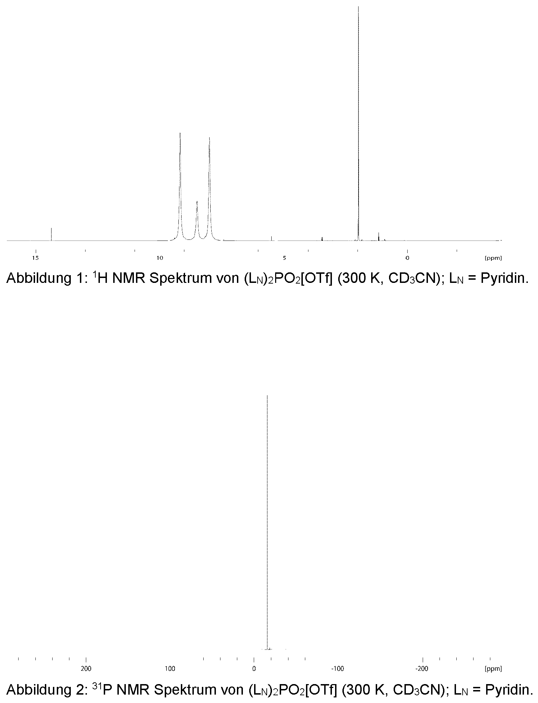

Die Charakterisierung des Produktes erfolgt über multinukleare NMR Spektroskopie (NMR Spektren sind im Anhang beigefügt; Abbildungen 1-3). Das Produkt löst sich in CH₃CN und sehr gut in CH₃NO₂.

¹H NMR (CD₃CN, 300 K, δ in ppm): 7.97 (4H, s(br), H2), 8.48 (2H, s(br), H3), 9.16 (4H, s(br), H1); ¹⁹F NMR (CD₃CN, 300 K, δ in ppm): -79.2 (3F, s, OTf⁻); ³¹P NMR (CD₃CN, 300 K, δ in ppm): -15.8 (1P, s).

### Beispiel 2: Synthese von (L_{N})₂PO₂[OTf] (L_{N} = Pyridiniumyl) aus 85% H₃PO₄

85% Phosphorsäure (400 mg; entsprechen 340 mg, 3.5 mmol, H₃PO₄) wird in Pyridin (5 ml) vorgelegt und auf -30 °C gekühlt. Dazu wird kaltes (-30 °C) Trifluormethansulfonsäureanhydrid (Tf₂O; 3.15 g, 11.2 mmol) langsam hinzu getropft. Die Reaktionslösung färbt sich braun und es bildet sich ein farbloser, klebriger Feststoff, welcher sich im Verlauf der Reaktion langsam auflöst. Nach 15 min bildet sich ein farbloser Niederschlag. Die Reaktionsmischung wird anschließend für 12 h bei 40 °C gerührt. Der Feststoff wird über eine Glasfritte filtriert, mit Pyridin (2 x 6 ml) gewaschen und anschließend im Vakuum getrocknet. Das Produkt wird als farbloser Feststoff in sehr guter Ausbeute [1.09 g; (85%)] erhalten.

Die Charakterisierung des Produktes erfolgt über multinukleare NMR Spektroskopie. Das Produkt löst sich sehr gut in CH₃CN.

¹H NMR (CD₃CN, 300 K, δ in ppm): 7.97 (4H, s(br), H2), 8.48 (2H, s(br), H3), 9.16 (4H, s(br), H1); ¹⁹F NMR (CD₃CN, 300 K, δ in ppm): -79.2 (3F, s, OTf⁻); ³¹P NMR (CD₃CN, 300 K, δ in ppm): -15.8 (1P, s).

### Beispiel 3: Synthese von (L_{N})₂PO₂[OTf] (L_{N} = 4-Dimethylaminopyridiniumyl) aus H₃PO₄

Reine Phosphorsäure (44 mg, 0.44 mmol) und [DMAP-Tf][OTf] (siehe: S. Yogendra, F. Hennrsdorf, A. Bauzá, A. Frontera, R. Fischer, J. J. Weigand, Chem. Commun. 2017, 53, 2954) (373 mg, 0.92 mmol) werden zusammen eingewogen und anschließend Pyridin (3 ml) hinzu gegeben. Die farblose Reaktionslösung wird 12 h bei Raumtemperatur gerührt, währenddessen sich ein farbloser Niederschlag bildet. Der Feststoff wird filtriert, mit CH₂Cl₁₂ (2 x 2 ml) gewaschen und anschließend im Vakuum getrocknet. Das Produkt wird als farbloser Feststoff in 81% Ausbeute (163 mg) erhalten. Das Produkt ist schwer löslich in verschiedenen Lösungsmitteln (CH₂Cl₂, PhF, CH₃CN).

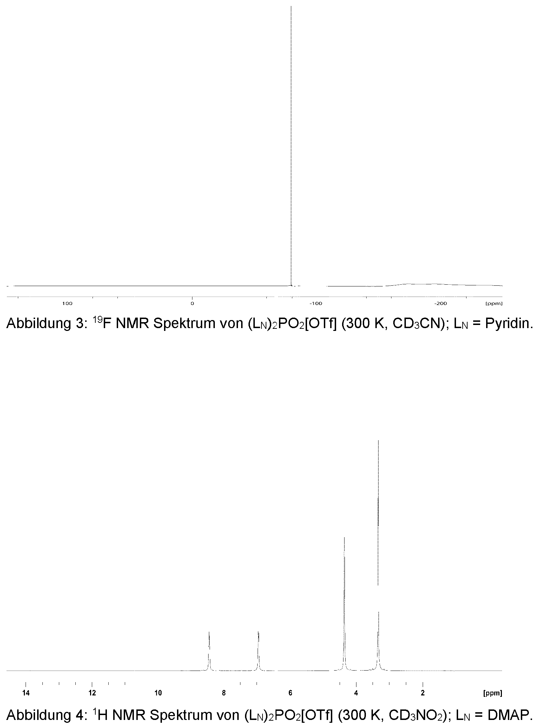

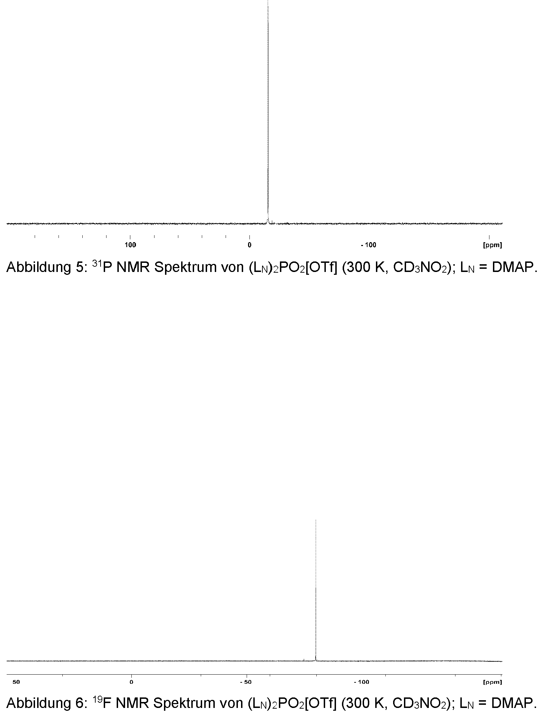

Die Charakterisierung des Produktes erfolgt über multinukleare NMR Spektroskopie (NMR Spektren sind im Anhang beigefügt; Abbildungen 4-6). Das Produkt löst sich in CH₃NO₂.

¹H NMR (MeNO₂, C₆D₆-Kapillare, 300 K, δ in ppm): 4.55 (12H, s, H4), 8.17 (4H, d(br), ³*J*_{HH} = 6.9 Hz, H2), 9.66 (2H, *pseudo* t(br), ²*J*_{HH} = 7.0 Hz, H1); ¹⁹F NMR (MeNO₂, C₆D₆-Kapillare, 300 K, δ in ppm): -78.4 (3F, s, OTf⁻); ³¹P NMR (MeNO₂, C₆D₆-Kapillare, 300 K, δ in ppm): -14.2 (1P, s).

### Beispiel 4: Synthese von (L_{N})₂PO₂[OTf] (L_{N} = 4-methylpyridiniumyl) aus H₃PO₄

Reine Phosphorsäure (133 mg, 1.35 mmol) wird in Pyridin (6 ml) vorgelegt und auf -30 °C gekühlt. Dazu wird kaltes (-30 °C) Trifluormethansulfonsäureanhydrid (Tf₂O; 817 mg, 2.9 mmol) langsam hinzu getropft. Die Reaktionslösung färbt sich orange-braun und es bildet sich ein farbloser, klebriger Feststoff, welcher sich im Verlauf der Reaktion langsam auflöst. Nach 15 min bildet sich ein farbloser Niederschlag. Die Reaktionsmischung wird anschließend für 12 h bei 40 °C gerührt. Anschließend wird 4-Methylpyridin (377 mg, 4.05 mmol) hinzugegeben, woraufhin die trübe Reaktionsmischung langsam klar wird. Nach 2 h fällt ein Feststoff aus, welcher durch Filtration, Waschen mit n-Pentan (4 ml) und Trocknen im Vakuum als farbloses Pulver isoliert wird. Ausbeute [487 mg; (>91%)].

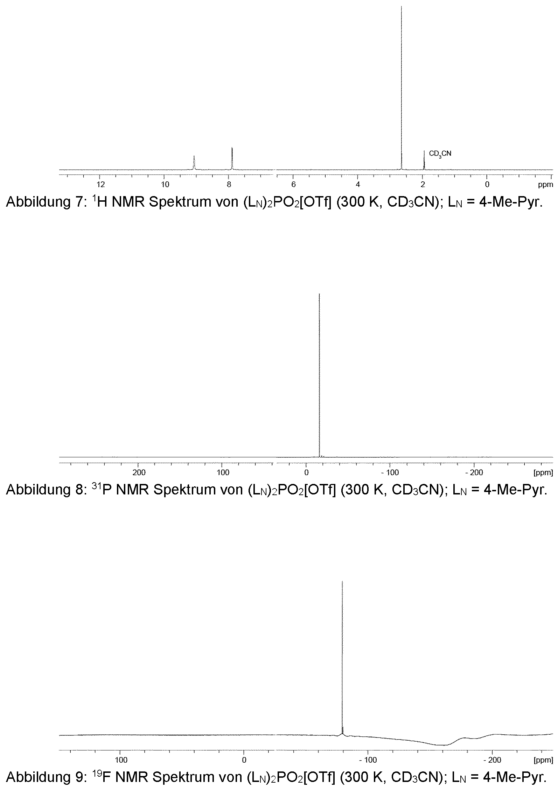

Die Charakterisierung des Produktes erfolgt über multinukleare NMR Spektroskopie (NMR Spektren sind im Anhang beigefügt; Abbildungen 7-9). Das Produkt löst sich in CH₃CN.

¹H NMR (CD₃CN, 300 K, δ in ppm): 2.63 (6H, s, H4), 7.88 (4H, d, ³*J*_{HH} = 6.3 Hz, H2), 9.06 (4H, m, H1); ¹³C{¹H} NMR (CD₃CN, δ in ppm): 22.7 (s, 2C, C4), 122.1 (q, 1C, ¹*J*_{CF} = 320.9 Hz, OTf⁻), 129.7 (s, 4C, C2), 145.2 (s, 4C, C1), 165.7 (s, 2C, C3); ¹⁹F NMR (CD₃CN, δ in ppm): - 79.3 (s, 3F, OTf⁻); ³¹P NMR (CD₃CN, δ in ppm): - 16.0 (s, 1P).

### Beispiel 5: Umsetzungen von Kaliumphosphat (K₃[PO₄])

### Beispiel 5a): Umsetzung unter erhöhter Temperatur

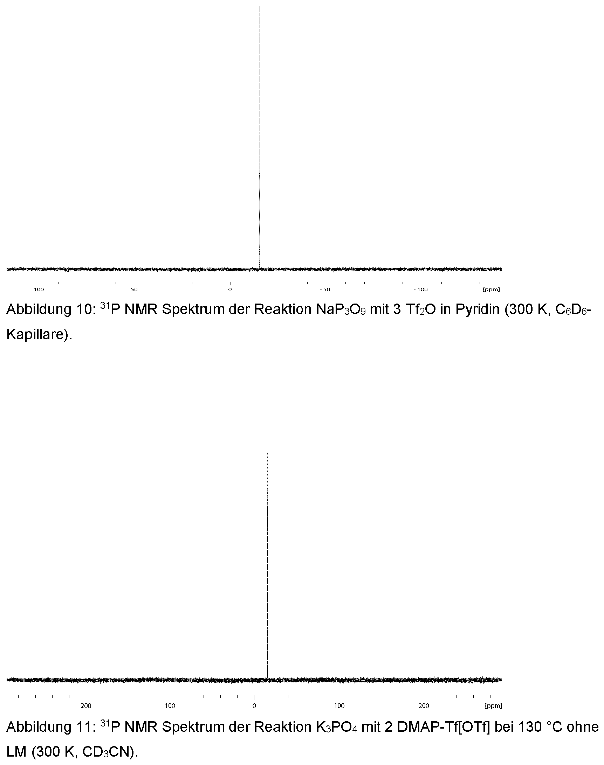

Kaliumphosphat (106 mg, 0.5 mmol) und [DMAP-Tf][OTf] (404 mg, 1.0 mmol) werden zusammen eingewogen und unter Rühren auf 130 °C erhitzt. Das zunächst farblose Stoffgemisch nimmt nach ca. 90 min eine beige Farbe an und wird leicht pastös. Von diesem Gemisch werden Proben entnommen und mittels multinuklearer NMR Spektroskopie untersucht. Die Bildung von [(DMAP)₂PO₂]⁺ wird bereits nach 3 h im ³¹P NMR Spektrum beobachtet (³¹P NMR (CD₃CN, 300 K, δ in ppm): -15.8 (1P, s); ³¹P NMR Spektrum ist im Anhang beigefügt; Abbildung 10).

### Beispiel 5b): Umsetzung unter mechanochemischen Bedingungen

Kaliumphosphat (50 mg, 0.236 mmol) und [DMAP-Tf][OTf] (190 mg, 0.471 mmol) werden zusammen eingewogen und in einer Kugelmühle (Fa. Ernst Hammerschmidt, Vibrator n.M.v. Ardenne) miteinander vermengt. Das zunächst farblose Stoffgemisch nimmt nach 60 min eine beige Farbe an. Von diesem Gemisch werden Proben entnommen und mittels multinuklearer NMR Spektroskopie untersucht. Die Bildung von [(DMAP)₂PO₂]⁺ wird bereits nach 1 h als einziges phosphorhaltiges Produkt im ³¹P NMR Spektrum nachgewiesen (³¹P NMR (CD₃CN, 300 K, δ in ppm): -15.7 (1P, s), was durch eine weitere Probe nach 7 h bestätigt wird).

### Beispiel 5c): Umsetzung mit Tf₂O in Pyridin unter Säurekatalyse

Kaliumphosphat (500 mg, 2.36 mmol) wird in Pyridin (ca. 20 ml) vorgelegt. Unter Eisbadkühlung wird dem Gemisch Tf₂O (1 ml, 5.89 mmol) zugegeben gefolgt von HOTf (0.02 ml, 0.12 mmol). Nach 24 h Rühren bei Raumtemperatur wird eine Probe genommen und mittels multinuklearer NMR Spektroskopie untersucht. Die Bildung von [(Pyr)₂PO₂]⁺ wird als einziges phosphorhaltiges Produkt im ³¹P NMR Spektrum nachgewiesen (³¹P NMR (Pyridin, C₆D₆-Kapillare, 300 K, δ in ppm): -15.3 (1P, s)).

### Beispiel 6: Umsetzung von Na₃P₃O₉ (Natriumtrimetaphosphat) mit Tf₂O in Pyridin

Natriumtrimetaphosphat (Na₃P₃O₉; 40 mg, 0.13 mmol) wird in 2 ml Pyridin suspendiert und es wird Tf₂O (110 mg, 0.39 mmol) langsam zugegeben. Die Reaktionsmischung wird 12 h bei 40°C gerührt. Nach Abkühlen auf Raumtemperatur wird eine Probe entnommen und mittels multinuklearer NMR Spektroskopie untersucht. Die Bildung von [(Pyr)₂PO₂]⁺ wird als einziges phosphorhaltiges Produkt im ³¹P NMR Spektrum nachgewiesen (³¹P NMR (Pyridin, C₆D₆-Kapillare, 300 K, δ in ppm): -15.3 (1P, s); ³¹P NMR Spektrum ist im Anhang beigefügt; Abbildung 11).

### Beispiel 7: Umsetzung von (P₂O₅)ₓ (Phosphorpentaoxid) mit Tf₂O in Pyridin

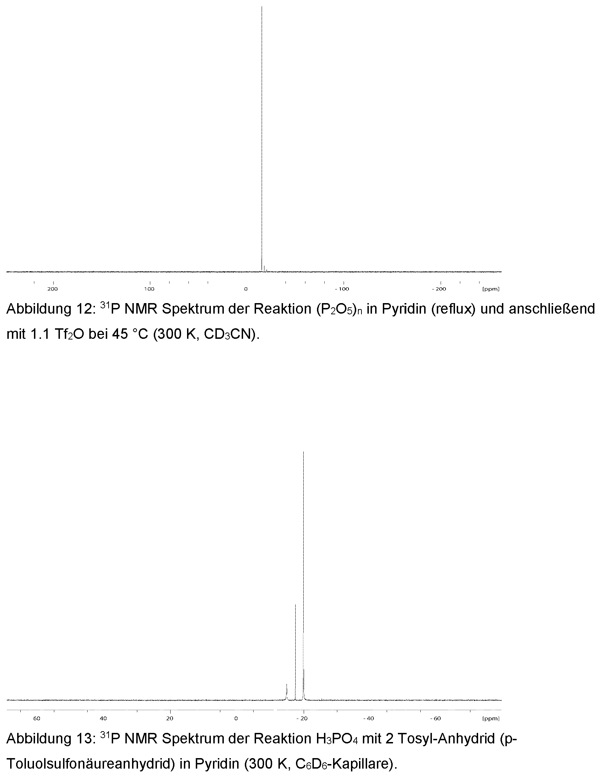

(P₂O₅)ₓ (2 g, 14.18 mmol; Alfa Aesar, 98%, Produktnummer A13348) wird in 10 ml Pyridin suspendiert und für 20 h refuxiert. Nach Kühlen auf 0 °C wird langsam Tf₂O (4.37 g, 15.49 mmol) hinzugegeben. Die dunkle Reaktionsmischung wird für 72 h bei 45 °C gerührt, wobei ein farbloser Niederschlag entsteht. Der Niederschlag wird filtriert und mit Pyridin gewaschen und anschließend im Vakuum getrocknet. Der erhaltene farblose Feststoff wird mittels multinuklearer NMR Spektroskopie untersucht und das ³¹P NMR Spektrum zeigt die saubere Bildung des Triflatsalzes [(Pyr)₂PO₂]⁺ als einziges Produkt. Ausbeute: 9,75 g (93%). (³¹P NMR (CD₃CN, 300 K, δ in ppm): -15.7 (1P, s); ³¹P NMR Spektrum ist im Anhang beigefügt; Abbildung 12).

### Beispiel 8: Umsetzung von H₃PO₄ mit p-Toluolsulfonäureanhydrid in Pyridin

H₃PO₄ (60 mg, 0.61 mmol) wird in 2 ml Pyridin suspendiert und es wird *p*-Toluolsulfonsäureanhydrid (437 mg, 1.34 mmol) langsam zugegeben. Die Reaktionsmischung wird 12 h bei Raumtemperatur gerührt. Es wird eine Probe entnommen und mittels multinuklearer NMR Spektroskopie untersucht. Die Bildung von [(Pyr)₂PO₂]⁺ wird im ³¹P NMR Spektrum nachgewiesen (³¹P NMR (Pyridin, C₆D₆-Kapillare, 300 K, δ in ppm): -15.3 (1P, s); siehe Abbildung 13).

### Beispiel 9: Reaktionen von (L_{N})₂PO₂[OTf] mit Alkoholen und Alkoholaten

### Beispiel 9a): Reaktion von (DMAP)₂PO₂[OTf] mit MeOH

(DMAP)₂PO₂[OTf] (30 mg, 0.065 mmol) wird in einer Mischung aus CH₃CN und MeNO₂ (ca. 1 ml) gelöst und 2 Tropfen trockenes MeOH dazu gegeben. Die Reaktionsmischung wurde über Nacht gerührt und NMR spektroskopisch untersucht. Das ³¹P NMR Spektrum zeigt die selektive Bildung von Dimethylphosphat [(MeO)₂PO₂⁷] (³¹P NMR (CH₃CN, MeNO₂, C₆D₆-Kapillare, 300 K, δ in ppm): -4.6 (1P, s)).

### Beispiel 9b): Reaktion von (DMAP)₂PO₂[OTf] mit PhOH

(DMAP)₂PO₂[OTf] (40 mg, 0.08 mmol) und Phenol (17 mg, 0.17 mmol) werden in CH₃CN (ca. 1.5 ml) suspendiert und für 2 Tage bei 40°C gerührt. Das ³¹P NMR Spektrum der Reaktionslösung zeigt die selektive Bildung von Diphenylphosphat [(PhO)₂PO₂⁷] (³¹P NMR (CH₃CN, MeNO₂, C₆D₆-Kapillare, 300 K, δ in ppm): -11.5 (1P, s)).

### Beispiel 9c): Reaktion von (Pyr)₂PO₂[OTf] mit 2-Ethylhexanol

(Pyr)₂PO₂[OTf] (500 mg, 1.35 mmol) wird in 2-Ethylhexanol (5 ml) suspendiert und für 3 Tage bei 65°C gerührt. Das ³¹P NMR Spektrum der Reaktionslösung zeigt die selektive Bildung von Bis(2-ethylhexyl)phosphat [(RO)₂PO₂⁷] (R = 2-ethylhexanoyl) (³¹P NMR (neat, C₆D₆-Kapillare, 300 K, δ in ppm): 2.12 (1P, s)). Das 2-Ethylhexanol wird im Vakuum abgezogen und der Rückstand in n-Hexan (6 ml) und entgastem Wasser (1 ml) aufgenommen. Nach Trennen der organischen Phase und anschließender Trocknung im Vakuum, wird Bis(2-ethylhexyl)phosphat in 97%iger Reinheit in 81% (347 mg) Ausbeute erhalten.

### Beispiel 9d): Reaktion von (DMAP)₂PO₂[OTf] mit KOtBu

Zu einer kalten (-30°C) Suspension aus (DMAP)₂PO₂[OTf] (50 mg, 0.11 mmol) in THF (1 ml) wurde langsam eine Lösung aus Kalium-tert-butanolat (25 mg, 0.22 mmol) in THF (1 ml) zugegeben, wobei sich die Suspension leicht gelb färbt. Nach 3 h zeigt das ³¹P NMR Spektrum der Reaktionslösung einen vollständigen Umsatz zu dem entsprechenden Di-tert-butylphosphat [(tBuO)₂PO₂⁻] (³¹P NMR (THF, C₆D₆-Kapillare, 300 K, δ in ppm): -5.9 (1P, s)).

### Beispiel 9e): Reaktion von (Pyr)₂PO₂[OTf] mit BINOL

(Pyr)₂PO₂[OTf] (200 mg, 0.54 mmol) und BINOL (155 mg, 0.54 mmol) werden zusammen eingewogen und in Pyridin (5 ml) suspendiert. Die Reaktionsmischung wird anschließend bei Raumtemperatur für 12 h gerührt. Nach 12 h zeigt das ³¹P NMR Spektrum der Reaktionslösung einen vollständigen und sauberen Umsatz zu dem entsprechenden BINOL-Phosphat (³¹P NMR (Pyridin, C₆D₆-Kapillare, 300 K, δ in ppm): 6.5 ppm (1P, s)). Die wässrige Aufarbeitung liefert das saubere Produkt in 88% Ausbeute.

### Beispiel 9f): Reaktion von (Pyr)₂PO₂[OTf] mit HOCH₂CF₃

(Pyr)₂PO₂[OTf] (185 mg, 0.5 mmol) und 2,2,2-trifluoroethanol (110 mg, 1.1 mmol) werden zusammen eingewogen und in Pyridin (2.5 ml) suspendiert. Die Reaktionsmischung wird bei Raumtemperatur für 12 h gerührt. Nach 12 h zeigt das ³¹P NMR Spektrum der Reaktionslösung einen vollständigen und sauberen Umsatz zu dem entsprechenden Bis-(trifluoroethyl)phosphat [(CF₃CH₂O)₂PO₂⁻] (³¹P NMR (THF, C₆D₆-Kapillare, 300 K, δ in ppm): -2.8 (1P, s)). Die wässrige Aufarbeitung liefert das saubere Produkt.

### Beispiel 10: Reaktion von (DMAP)₂PO₂[OTf] mit PhMgBr

Zu einer kalten (-80°C) Suspension aus (DMAP)₂PO₂[OTf] (60 mg, 0.13 mmol) in CH₂Cl₂ (3 ml) werden 0,27 ml einer 1 M THF Lösung von Phenylmagnesiumbromid (0.27 mmol) gegeben. Die Reaktionsmischung wird über Nacht gerührt, wobei eine braune, klare Lösung entsteht. Die NMR Untersuchung der Reaktionslösung zeigt die Bildung von Diphenylphosphinat [(Ph)₂PO₂⁻] (³¹P NMR (CD₃CN, 300 K, δ in ppm): 14.8 (1P, s)).

### Beispiel 11: Reaktionen von (L_{N})₂PO₂[OTf] mit Aminen

### Beispiel 11a): Reaktion von (Pyr)₂PO₂[OTf] mit Natriumtriazolid

Zu einer Suspension aus Natriumtriazolid (74 mg, 0.81 mmol) in CH₃CN (2 ml) wird festes (Pyr)₂PO₂[OTf] (150 mg, 0.40 mmol) gegeben und die Reaktionsmischung wird für weitere 2 h gerührt. Die farblose Suspension wird filtriert und der Feststoff mit CH₃CN gewaschen und anschließend im Vakuum getrocknet. Der Feststoff wird mittels multinuklearer NMR Spektroskopie untersucht wodurch die Bildung des entsprechenden (Triazol)₂PO₂⁻ bestätigt wird. Das ³¹P NMR Spektrum zeigt dabei zwei unterschiedliche Isomere (³¹P NMR (DMSO-d₆, 300 K, δ in ppm): -22.3 (1P, s; 85%), -24.4 (1P, s; 15%)).

### Beispiel 11b): Reaktion von (Pyr)₂PO₂[OTf] mit Natriumimidazolid

Zu einer Suspension aus Natriumimidazolid (54 mg, 0.54 mmol) in CH₃CN (2 ml) wird festes (Pyr)₂PO₂[OTf] (100 mg, 0.27 mmol) gegeben und die Reaktionsmischung wird für weitere 2 h gerührt. Die farblose Suspension wird filtriert und der Feststoff mit CH₃CN gewaschen und anschließend im Vakuum getrocknet. Der Feststoff wird mittels multinuklearer NMR Spektroskopie untersucht wodurch die Bildung des entsprechenden (Imidazol)₂PO₂⁻ bestätigt wird. Das ³¹P NMR Spektrum zeigt dabei zwei unterschiedliche Isomere (³¹P NMR (DMSO-d₆, 300 K, δ in ppm): -20.8 (1P, s; 11%), -21.4 (1P, s; 89%)).

### Beispiel 11c): Reaktion von (Pyr)₂PO₂[OTf] mit Natriumpyrazolid

Zu einer Suspension aus Natriumpyrazolid (49 mg, 0.54 mmol) in CH₃CN (2 ml) wird festes (Pyr)₂PO₂[OTf] (100 mg, 0.27 mmol) gegeben und die Reaktionsmischung wird für weitere 12 h gerührt. Die farblose Suspension wird filtriert und der Feststoff mit CH₃CN gewaschen und anschließend im Vakuum getrocknet. Der Feststoff wird mittels multinuklearer NMR Spektroskopie untersucht wodurch die Bildung des entsprechenden (Pyrazol)₂PO₂⁻ bestätigt wird (³¹P NMR (DMSO-d₆, 300 K, δ in ppm): -18.2 (1P, s)).

### Beispiel 11d): Reaktion von (Pyr)₂PO₂[OTf] mit NH₃

(Pyr)₂PO₂[OTf] (100 mg, 0.27 mmol) wird in CH₃CN (2 ml) gelöst und NH₃ 0.54 ml (0.5 M in Dioxan) hinzugegeben. Die Reaktionsmischung wird für weitere 12 h gerührt. Die farblose Suspension wird filtriert und der Feststoff mit CH₃CN gewaschen und anschließend im Vakuum getrocknet. Der Feststoff wird mittels multinuklearer NMR Spektroskopie untersucht und zeigt die Bildung unter anderem die Bildung von (NH₂)₂PO₂⁻ (³¹P NMR (DMSO-d₆, 300 K, δ in ppm): -0.3 (1P, *pent.* ²*J*_{PH} = 8 Hz)).

### Beispiel 12: Reaktionen von (L_{N})₂PO₂[OTf] zur Bildung asymmetrisch substituierter Produkte

### Beispiel 12a): Reaktion von (Pyr)₂PO₂[OTf] mit einem Äquivalent Chinuclidin

(Pyr)₂PO₂[OTf] (50 mg, 0.13 mmol) wird in THF (2 ml) suspendiert und festes Chinuclidin (40 mg, 0.35 mmol) hinzugegeben. Die Reaktionsmischung wird für weitere 12 h gerührt. Die farblose Suspension wird filtriert und der Feststoff anschließend im Vakuum getrocknet. Der Feststoff wird mittels multinuklearer NMR Spektroskopie untersucht und zeigt die Bildung des gemischt-substituierten Derivats (Quin)(Pyr)PO₂⁺ (³¹P NMR (CD₃CN, 300 K, δ in ppm): -3.3 (1P, s)).

### Beispiel 12b): Reaktion von (Pyr)₂PO₂[OTf] mit Cholinchlorid und n-Tetradecan-1-ol

Die Verbindung (Pyr)₂PO₂[OTf] (2.20 g, 5.90 mmol) und Cholinchlorid (826 mg, 5.90 mmol) werden zusammen eingewogen und in Pyridin (12 ml) suspendiert. Das Reaktionsgemisch wird für 48 h bei Raumtemperatur gerührt und *n*-Tetradecan-1-ol (1.14 g, 5.3 mmol) zugegeben. Nach weiteren 24 h werden alle flüchtigen Bestandteile im Vakuum entfernt, um ein braunes Pulver zu erhalten. Das Produkt wird durch Säulenchromatographie mit einer Eluentenmischung aus CHCl₃ / MeOH / NH₃ (25%) isoliert. Das verbleibende Ammoniumsalz wird mit CH₃CN extrahiert und ein weiterer Trocknungsschritt ergibt das Produkt als farbloses Pulver als NH₄[Cl]-Co-Kristallisat in 53% (1.35 g) Ausbeute. Der Feststoff wird mittels multinuklearer NMR Spektroskopie untersucht und zeigt die Bildung des gemischt-substituierten Derivats.

¹H NMR (D₂O, δ in ppm): 0.81 (3H, t, ³*J*_{HH} = 6.9 Hz, H17), 1.26-1.16 (20H, m, H7-H14), 1.33-1.26 (2H, m, H6), 1.56 (2H, quin, ³*J*_{HH} = 6.8 Hz, H5), 3.18 (9H, s, H3), 3.64-3.58 (2H, m, H2), 3.78 (2H, *pseudo* q, ³*J*_{HP} = 6.5 Hz, ³*J*_{HH} = 6.5 Hz, H4), 4.22 (2H, s(br), H1); ³¹P NMR (D₂O, δ in ppm): 0.6 (quin, ³*J*_{PH} = 5 Hz).

### Beispiel 12c): Reaktion von (Pyr)₂PO₂[OTf] mit Cholinchlorid und (R)-Solketal

(Pyr)₂PO₂[OTf] (3.70 g, 10.0 mmol) und Cholinchlorid (1.40 g, 10.0 mmol) werden in Pyridin suspendiert und für 20 h bei Raumtemperatur gerührt. Das Gemisch wird dann mit (R)-Solketal (1.32 g, 10.0 mmol) versetzt und mehrere Tage bei 40 °C im Ölbad weitergerührt, wobei es sich stark aufklärt. Nach Abkühlung auf Raumtemperatur werden alle flüchtigen Bestandteile im Vakuum entfernt, um ein rot gefärbtes Öl zu erhalten. Das Produkt wird durch Säulenchromatographie mit einer Eluentenmischung aus CHCl₃ / MeOH / NH₃ (25%) isoliert. Nach Trocknen im Vakuum wird das Produkt als farbloses Pulver als NH₄[Cl]-Co-Kristallisat in 52% (1.91 g) Ausbeute erhalten. Der Feststoff wird mittels multinuklearer NMR Spektroskopie untersucht und zeigt die Bildung des gemischt-substituierten Derivats.

¹H NMR (CD₃OD, δ in ppm): 1.33 (s, 3H, H8/8'), 1.39 (s, 3H, H8/8'), 3.23 (s, 9H, H1), 3.65 (m, 2H, H2), 3.82 (dd, 1H, ²*J*_{HH} = 8.3 Hz, ³*J*_{HH} = 6.1 Hz, H6), 3.88 (m, 2H, H4), 4.07 (dd, 1H, ²*J*_{HH} = 8.3 Hz, ³*J*_{HH} = 6.6 Hz, H6), 4.25-4.34 (m, 3H, H3/5); ³¹P NMR (CD₃OD, δ in ppm): - 0.5 (quin, 1P ³*J*_{PH} = 6.6 Hz).

### Beispiel 12d): Reaktion von (Pyr)₂PO₂[OTf] mit Natriumazid und 2',3'-Isopropylidenuridin

(Pyr)₂PO₂[OTf] (370 mg, 1.0 mmol) und NaN₃ (65 mg, 1.0 mmol) werden in CH₃CN suspendiert und für 4 h bei Raumtemperatur gerührt, wobei ein voluminöser farbloser Niederschlag ausfällt. Zu der Suspension wird dann eine Lösung von 2',3'-Isopropylidenuridin (284 mg, 1.0 mmol) in Pyridin gegeben und das resultierende Gemisch wird für 16 h weitergerührt, wobei eine fast klare Lösung entsteht. Nach Entfernung aller flüchtigen Bestandteile im Vakuum wird der erhaltene Rückstand mit CH₃CN gewaschen und im Vakuum getrocknet, um 334 mg des Rohprodukts als Natriumsalz zu erhalten. Das Rohprodukt wird anschließend durch Säulenchromatographie mit einem CHCl₃/MeOH-Gemisch gereinigt. Nach Entfernung aller flüchtigen Bestandteile aus den produkthaltigen Fraktionen wird die freie Säure als farbloses, hygroskopisches Pulver erhalten. Ausbeute 29% (111 mg). Der Feststoff wird mittels multinuklearer NMR Spektroskopie untersucht und zeigt die Bildung des gemischt-substituierten Derivats.

¹H NMR (DMSO-d₆, δ in ppm): 1.29 (s, 3H, H7'/8'), 1.49 (s, 3H, H7'/8'), 3.83-3.96 (m, 2H, H5'), 4.15-4.19 (m, 1H, H4'), 4.77 (dd, 1H, ³*J*_{HH} = 6.4/3.7Hz, H3'), 4.96 (dd, 1H, ³*J*_{HH} = 6.4 / 2.4 Hz, H2'), 5.60 (d, 1H, ³*J*_{HH} = 8.1 Hz, H5), 5.83 (d, 1H, ³*J*_{HH} = 2.4 Hz, H1'), 7.76 (d, 1H, ³*J*_{HH} = 8.1 Hz, H6), 11.38 (s(br), 1H, H3); ³¹P NMR (DMSO-d₆, δ in ppm): -5.6 (s, 1P).

Das Produkt des Beispiels 1 (Abbildung 1-3) zeigt in den ³¹P- und ¹⁹F-NMR-Spektren jeweils ein Singulett. Die Resonanz im ³¹P-NMR-Spektrum verweist mit seiner chemischen Verschiebung von δ(P) = -15.8 ppm auf den aus der Literatur bekannten Phosphor(V)-Präkursor (P. Rovnanik, L. Kapička, J. Taraba, M. Černík, *Inorg. Chem.* **2004,** 43, 2435). Die Resonanz im ¹⁹F-NMR-Spektrum verweist mit seiner chemischen Verschiebung von δ(F) = -79.2 ppm auf das aus der Literatur bekannte Triflatanion. Die chemischen Verschiebungen im ¹H-NMR-Spektrum bei δ(H) = 7.97 ppm, δ(H) = 8.48 ppm und δ(H) = 9.16 ppm, verweisen auf die Anwesenheit des Pyridin Liganden.

Das Produkt des Beispiels 3 (Abbildungen 4-6) zeigt in den ³¹P- und ¹⁹F-NMR-Spektren jeweils ein Singulett. Die Resonanz im ³¹P-NMR-Spektrum verweist mit seiner chemischen Verschiebung von δ(P) = -14.2 ppm auf den aus der Literatur bekannten Phosphor(V)-Präkursor (P. Rovnanik, L. Kapička, J. Taraba, M. Černík, *Inorg. Chem.* **2004,** *43*, 2435). Die Resonanz im ¹⁹F-NMR-Spektrum verweist mit seiner chemischen Verschiebung von δ(F) = -78.4 ppm auf das aus der Literatur bekannte Triflatanion. Die chemischen Verschiebungen im ¹H-NMR-Spektrum bei δ(H) = 4.55 ppm, δ(H) = 8.17 ppm und δ(H) = 9.66 ppm, verweisen auf die Anwesenheit des DMAP Liganden.

## Patentansprüche

1. Verfahren zur Synthese stickstoffhaltiger Phosphor(V)-Präkursoren der Formel (I), 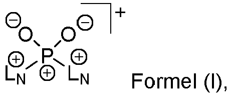
wobei das Verfahren die folgenden Schritte in der angegebenen Reihenfolge umfasst:
a) Bereitstellung einer Phosphat-Verbindung;
b) Umsetzung der Phosphat-Verbindung aus Schritt a) mit einem Sauerstoffakzeptor in Gegenwart einer Lewis-Base L_{N}, die zur Koordination über ein Stickstoffatom fähig ist,
wobei der Sauerstoffakzeptor das Kation eines Sulfonsäureanhydrids gemäß der Formel (II) ist und das Sulfonsäureanhydrid gemäß der Formel (III) ist, 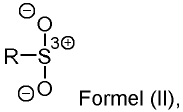 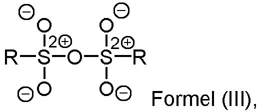
wobei gemäß Schritt b) alternativ entweder
b1) die Phosphat-Verbindung aus Schritt a) mit einem Sulfonsäureanhydrid gemäß der Formel (III) in Gegenwart einer Lewis-Base L_{N} zur Reaktion gebracht wird,
oder
b2) die Phosphat-Verbindung aus Schritt a) mit dem Reaktionsprodukt eines Sulfonsäureanhydrids gemäß der Formel (III) mit einer Lewis-Base L_{N} zur Reaktion gebracht wird, wobei das genannte Reaktionsprodukt gemäß der Formel (IV) ist 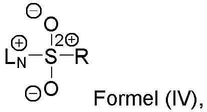
wobei R ein aliphatischer oder aromatischer Kohlenwasserstoffrest ist, der Heteroatome enthalten kann, wobei die Anzahl der Kohlenstoffatome des Rests R von 1 bis 21 ist, und die Heteroatome ausgewählt sind aus der Gruppe bestehend aus Sauerstoff, Stickstoff, Fluor, Chlor, Brom, lod, und deren Mischungen,
wobei die Lewis-Base L_{N}, die zur Koordination über ein Stickstoffatom fähig ist, eine stickstoffhaltige heteroaromatische Verbindung ist, die einen sechsgliedrigen heteroaromatischen Ring enthält, der ein zur Koordination fähiges Stickstoffatom enthält, und wobei die Anzahl der Kohlenstoffatome der Lewis-Base L_{N} von 4 bis 19 ist.

2. Das Verfahren gemäß Anspruch 1, wobei die Phosphat-Verbindung ausgewählt ist aus der Gruppe bestehend aus Salzen und Säuren des Orthophosphats, Salzen und Säuren der Polyphosphate, Salzen und Säuren der Metaphosphate, Salzen und Säuren der aus diesen ableitbaren weiter kondensierten Phosphaten, Phosphorpentaoxid (P₄O₁₀), und deren Mischungen,
wobei die Polyphosphate durch die Formel PₘO₃ₘ₊₁^{(m+2)-} beschrieben werden können und wobei gilt: m = 2 bis 10000; und
wobei die Metaphosphate durch die Formel (PO₃⁻)ₙ beschrieben werden können und wobei gilt: n = 3 bis 10.

3. Das Verfahren gemäß Anspruch 2, wobei die Polyphosphate durch die Formel PₘO₃ₘ₊₁^{(m+2)-} beschrieben werden können und wobei gilt: m = 2 bis 10000, bevorzugt m = 2 bis 50; und wobei die Metaphosphate durch die Formel (PO₃⁻)ₙ beschrieben werden können und wobei gilt: n = 3 bis 10, bevorzugt n = 3 oder 4.

4. Das Verfahren gemäß einem der Ansprüche 1 bis 3, wobei die Phosphat-Verbindung Phosphorsäure umfasst, bevorzugt die Phosphat-Verbindung Phosphorsäure ist.

5. Das Verfahren gemäß einem der Ansprüche 1 bis 4, wobei R ein aliphatischer Kohlenwasserstoffrest mit 1 bis 6 Kohlenstoffatomen ist, der 0 bis 3 Heteroatome enthält, die ausgewählt sind aus der Gruppe bestehend aus Sauerstoff, Stickstoff und Fluor.

6. Das Verfahren gemäß einem der Ansprüche 1 bis 4, wobei R ein aromatischer Kohlenwasserstoffrest ist, der durch die folgende Formel (IIIa) definiert ist, 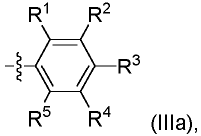 wobei die Reste R¹, R², R³, R⁴, und R⁵ aus den folgenden Kombinationen ausgewählt sind:
R¹, R², R³, R⁴, R⁵ = H,
R¹, R², R³, R⁴, R⁵ = CH₃,
R¹, R², R³, R⁴ = H und R⁵ = CH₃,
R¹, R², R³, R⁴ = H und R⁵ = F,
R¹, R², R³, R⁴ = H und R⁵ = Cl,
R¹, R², R³, R⁴ = H und R⁵ = OCH₃,
R¹, R², R³, R⁴ = H und R⁵ = NO₂,
R¹, R², R³, R⁴ = H und R⁵ = CF₃,
R¹, R², R⁴ = H und R³, R⁵ = CH₃,
R², R⁴ = H und R¹, R³, R⁵ = CH₃,
R², R³, R⁵ = H und R¹, R⁴ = CH₃, oder
R¹, R², R⁴, R⁵ = H und R³ = CH₃.

7. Das Verfahren gemäß der Ansprüche 5 und 6, wobei R Trifluormethyl ist oder R gemäß Formel (IIIa) definiert ist und es gilt:
R¹, R², R⁴, R⁵ = H und R³ = CH₃.

8. Das Verfahren gemäß einem der Ansprüche 1 bis 7, wobei die Lewis-Base L_{N} einen oder zwei sechsgliedrige heteroaromatische Ringe enthält, die Lewis-Base L_{N} pro sechsgliedrigem heteroaromatischen Ring im sechsgliedrigen heteroaromatischen Ring ein oder zwei zur Koordination fähige Stickstoffatome enthält, wobei die Lewis-Base L_{N} insgesamt ein oder zwei Stickstoffatome enthält.

9. Das Verfahren gemäß einem der Ansprüche 1 bis 8, wobei die Lewis-Base L_{N} unabhängig voneinander ein oder zwei Stickstoffatome enthält, null, ein oder zwei Sauerstoffatome enthält, null, ein, zwei, drei oder vier Heteroatome enthält, die ausgewählt sind aus der Gruppe bestehend aus Fluor, Chlor, Brom, und lod, und darüber hinaus keine weiteren Heteroatome enthält.

10. Das Verfahren gemäß einem der Ansprüche 1 bis 9, wobei die Lewis-Base L_{N} ausgewählt ist aus der Gruppe bestehend aus Pyridinen, Picolinen, Lutidinen, Collidinen, Bipyridinen, Pyridazinen, Pyrimidinen, Pyrazinen, Chinolinen und Isochinolinen.

11. Das Verfahren gemäß einem der Ansprüche 1 bis 10, wobei die Lewis-Base L_{N} ausgewählt ist aus der Gruppe bestehend aus Pyridin, 4-Dimethylaminopyridin, und deren Mischungen.

12. Das Verfahren gemäß einem der Ansprüche 1 bis 11, wobei die Synthese in einem aprotischen Lösemittel erfolgt.

13. Das Verfahren gemäß Anspruch 12, wobei das Lösemittel Pyridin ist.

14. Verfahren zur Synthese von Oxyphosphorverbindungen, wobei das Verfahren die folgenden Schritte in der angegebenen Reihenfolge umfasst:
c) Synthese eines stickstoffhaltigen Phosphor(V)-Präkursors der Formel (I) gemäß dem Verfahren zur Synthese stickstoffhaltiger Phosphor(V)-Präkursoren der Formel (I) nach einem der Ansprüche 1 bis 13;
d) Umsetzung des stickstoffhaltigen Phosphor(V)-Präkursors der Formel (I) mit einem Nucleophil.

15. Das Verfahren gemäß Anspruch 14, wobei das Nucleophil ausgewählt ist aus der Gruppe bestehend aus Alkoholen, Ammoniak, primären Aminen, sekundären Aminen, tertiären Aminen, Azolen, metallorganischen Verbindungen und Fluorid.

## Claims

1. A process for the synthesis of nitrogen-containing phosphorus(V) precursors of formula (I), 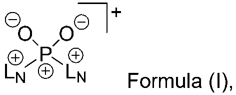
wherein the method comprises the following steps in the order indicated:
a) providing a phosphate compound;
b) reacting the phosphate compound from step a) with an oxygen acceptor in the presence of a Lewis base L_{N} capable of coordination via a nitrogen atom,
wherein the oxygen acceptor is the cation of a sulfonic acid anhydride according to formula (II) and the sulfonic acid anhydride is according to formula (III), 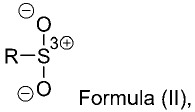 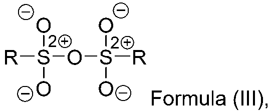
wherein, according to step b), alternatively either
b1) the phosphate compound from step a) is reacted with a sulfonic acid anhydride according to formula (III) in the presence of a Lewis base L_{N},
or
b2) the phosphate compound from step a) is reacted with the reaction product of a sulfonic acid anhydride according to formula (III) with a Lewis base L_{N}, wherein said reaction product is according to formula (IV) 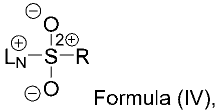
wherein R is an aliphatic or aromatic hydrocarbon radical which may contain heteroatoms, the number of carbon atoms of the radical R being from 1 to 21, and the heteroatoms being selected from the group consisting of oxygen, nitrogen, fluorine, chlorine, bromine, iodine, and mixtures thereof,
wherein the Lewis base L_{N} capable of coordination via a nitrogen atom is a nitrogen containing heteroaromatic compound containing a six-membered heteroaromatic ring containing a nitrogen atom capable of coordination, and wherein the number of carbon atoms of the Lewis base L_{N} is from 4 to 19.

2. The process according to claim 1, wherein the phosphate compound is selected from the group consisting of salts and acids of orthophosphate, salts and acids of polyphosphates, salts and acids of metaphosphates, salts and acids of further condensed phosphates derivable therefrom, phosphorus pentoxide (P₄O₁₀), and mixtures thereof,
wherein the polyphosphates can be described by the formula PₘO₃ₘ₊₁^{(()m+2)-} and wherein: m = 2 to 10,000; and
wherein the metaphosphates can be described by the formula (PO₃⁻)ₙ and wherein: n = 3 to 10.

3. The process according to claim 2, wherein the polyphosphates can be described by the formula PₘO₃ₘ₊₁^{(m+2)-} and wherein m = 2 to 10,000, preferably m = 2 to 50; and wherein the metaphosphates can be described by the formula (PO₃⁻)ₙ and where n = 3 to 10, preferably n = 3 or 4.

4. The process according to any one of claims 1 to 3, wherein the phosphate compound comprises phosphoric acid, preferably the phosphate compound is phosphoric acid.

5. The process according to any one of claims 1 to 4, wherein R is an aliphatic hydrocarbon radical having 1 to 6 carbon atoms, which contains 0 to 3 heteroatoms selected from the group consisting of oxygen, nitrogen and fluorine.

6. The process according to any one of claims 1 to 4, wherein R is an aromatic hydrocarbon residue defined by the following formula (Illa), 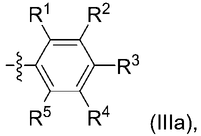 wherein the radicals R¹, R², R³, R⁴, and R⁵ are selected from the following combinations:
R¹, R², R³, R⁴, R⁵ = H,
R¹, R², R³, R⁴, R⁵ = CH₃,
R¹, R², R³, R⁴ = H and R⁵ = CH₃,
R¹, R², R³, R⁴ = H and R⁵ = F,
R¹, R², R³, R⁴ = H and R⁵ = CI,
R¹, R², R³, R⁴ = H and R⁵ = OCH₃,
R¹, R², R³, R⁴ = H and R⁵= NO₂,
R¹, R², R³, R⁴ = H and R⁵ = CF₃,
R¹, R², R⁴ = H and R³, R⁵ = CH₃,
R², R⁴ = H and R¹, R³, R⁵ = CH₃,
R², R³, R⁵ = H and R¹, R⁴ = CH₃, or
R¹, R², R⁴, R⁵ = H and R³ = CH₃.

7. The process according to claims 5 and 6, wherein R is trifluoromethyl or R is defined according to formula (IIIa) and the following applies:
R¹, R², R⁴, R⁵ = H and R³ = CH₃.

8. The process according to any one of claims 1 to 7, wherein the Lewis base L_{N} contains one or two six-membered heteroaromatic rings, the Lewis base L_{N} contains one or two coordination-capable nitrogen atoms per six-membered heteroaromatic ring in the six-membered heteroaromatic ring, wherein the Lewis base L_{N} contains a total of one or two nitrogen atoms.

9. The process according to any one of claims 1 to 8, wherein the Lewis base L_{N} independently contains one or two nitrogen atoms, contains zero, one or two oxygen atoms, contains zero, one, two, three or four heteroatoms selected from the group consisting of fluorine, chlorine, bromine and iodine, and contains no further heteroatoms.

10. The process according to any one of claims 1 to 9, wherein the Lewis base L_{N} is selected from the group consisting of pyridines, picolines, lutidines, collidines, bipyridines, pyridazines, pyrimidines, pyrazines, quinolines and isoquinolines.

11. The process according to any one of claims 1 to 10, wherein the Lewis base L_{N} is selected from the group consisting of pyridine, 4-dimethylaminopyridine, and mixtures thereof.

12. The process according to any one of claims 1 to 11, wherein the synthesis is carried out in an aprotic solvent.

13. The process according to claim 12, wherein the solvent is pyridine.

14. A process for synthesising oxyphosphorus compounds, the process comprising the following steps in the order indicated:
c) synthesising a nitrogen-containing phosphorus(V) precursor of formula (I) according to the process for the synthesis of nitrogen-containing phosphorus(V) precursors of formula (I) according to any one of claims 1 to 13;
d) reacting the nitrogen-containing phosphorus(V) precursor of formula (I) with a nucleophile.

15. The process according to claim 14, wherein the nucleophile is selected from the group consisting of alcohols, ammonia, primary amines, secondary amines, tertiary amines, azoles, organometallic compounds and fluoride.

## Revendications

1. Procédé de synthèse de précurseurs de phosphore (V) contenant de l'azote de la formule (I), 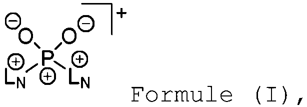
dans lequel le procédé comprend les étapes suivantes dans l'ordre indiqué :
a) la mise à disposition d'un composé phosphate,
b) la réaction du composé phosphate de l'étape a) avec un accepteur d'oxygène en présence d'une base de Lewis L_{N} qui est capable de se coordonner par l'intermédiaire d'un atome d'azote,
dans lequel l'accepteur d'oxygène est le cation d'un anhydride d'acide sulfonique selon la formule (II) et l'anhydride d'acide sulfonique selon la formule (III), 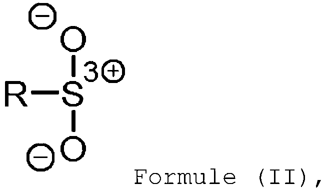 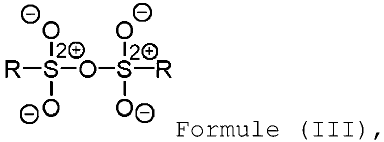
dans lequel, conformément à l'étape b), soit
b1) le composé phosphate de l'étape a) réagit avec un anhydride d'acide sulfonique selon la formule (III) en présence d'une base de Lewis L_{N},
soit
b2) le composé phosphate de l'étape a) réagit avec le produit de réaction d'un anhydride d'acide sulfonique selon la formule (III) avec une base de Lewis L_{N}, dans lequel ledit produit de réaction est selon la formule (IV) est 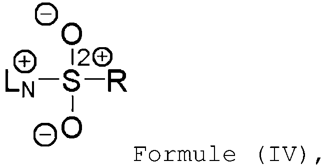
dans lequel R est un radical hydrocarboné aliphatique ou aromatique, qui peut contenir des hétéroatomes, dans lequel le nombre des atomes de carbone du radical R va de 1 à 21, et les hétéroatomes sont choisis parmi le groupe constitué de l'oxygène, de l'azote, du fluor, du chlore, du brome, de l'iode et de leurs mélanges,
dans lequel la base de Lewis L_{N}, qui est capable de se coordonner par l'intermédiaire d'un atome d'azote, est un composé hétéroaromatique contenant de l'azote, qui contient un cycle hétéroaromatique à six maillons, qui contient un atome d'azote capable de se coordonner, et dans lequel le nombre des atomes de carbone de la base de Lewis L_{N} va de 4 à 19.

2. Procédé selon la revendication 1, dans lequel le composé phosphate est choisi parmi le groupe constitué de sels et acides de l'orthophosphate, des sels et acides des polyphosphates, des sels et acides des métaphosphates, des sels et acides des phosphates davantage condensés dérivés de ceux-ci,
du pentaoxyde de phosphore (P₄O₁₀), et de leurs mélanges,
dans lequel les polyphosphates peuvent être décrits par la formule PₘOₘ₊₁^{(m+2) -} et dans lequel s'applique : m = 2 à 10 000 ; et
dans lequel les métaphosphates peuvent être décrits par la formule (PO₃⁻)ₙ et dans lequel s'applique : n = 3 à 10.

3. Procédé selon la revendication 2, dans lequel les polyphosphates peuvent être décrits par la formule PₘO₃ₘ₊₁ ^{(m+2)-} et dans lequel s'applique : m = 2 à 10 000, de manière préférée m = 2 à 50 ; et dans lequel les métaphosphates peuvent être décrits par la formule (PO₃⁻)ₙ et dans lequel s'applique : n = 3 à 10, de manière préférée n = 3 ou 4.

4. Procédé selon l'une des revendications 1 à 3, dans lequel le composé phosphate comprend de l'acide phosphorique, de manière préférée le composé phosphate est de l'acide phosphorique.

5. Procédé selon l'une des revendications 1 à 4, dans lequel R est un radical hydrocarboné aliphatique avec 1 à 6 atomes de carbone, qui contient 0 à 3 hétéroatomes, qui sont choisis parmi le groupe constitué de l'oxygène, de l'azote et du fluor.

6. Procédé selon l'une des revendications 1 à 4, dans lequel R est un radical hydrocarboné aromatique, qui est défini par la formule (IIIa) suivante, 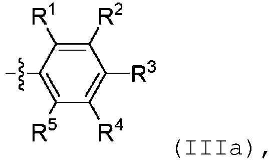 dans lequel les radicaux R¹, R², R³, R⁴, et R⁵ sont choisis parmi les combinaisons suivantes :
R¹, R², R³, R⁴, R⁵ = H,
R¹, R², R³, R⁴, R⁵ = CH₃,
R¹, R², R³, R⁴ = H et R⁵ = CH₃,
R¹, R², R³, R⁴ = H et R⁵ = F,
R¹, R², R³, R⁴ = H et R⁵ = Cl,
R¹, R², R³, R⁴ = H et R⁵ = OCH₃,
R¹, R², R³, R⁴ = H et R⁵ = NO₂,
R¹, R², R³, R⁴ = H et R⁵ = CF₃,
R¹, R², R⁴ = H et R³, R⁵ = CH₃,
R², R⁴ = H et R¹, R³, R⁵ = CH₃,
R², R³, R⁵ = H et R¹, R⁴ = CH₃, ou
R¹, R², R⁴, R⁵ = H et R³ = CH₃.

7. Procédé selon les revendications 5 et 6, dans lequel R est du trifluorométhyle ou R est défini selon la formule (IIIa) et s'applique :
R¹, R², R⁴, R⁵ = H et R³ = CH₃.

8. Procédé selon l'une des revendications 1 à 7, dans lequel la base de Lewis L_{N} contient un ou deux cycles hétéroaromatiques à six maillons, la base de Lewis L_{N} contient un ou deux atomes d'azote capables de se coordonner par cycle hétéroaromatique à six maillons dans le cycle hétéroaromatique à six maillons, dans lequel la base de Lewis L_{N} contient au total un ou deux atomes d'azote.

9. Procédé selon l'une des revendications 1 à 8, dans lequel la base de Lewis L_{N} contient indépendamment l'un de l'autre un ou deux atomes d'azote, zéro, un ou deux atomes d'oxygène, contient zéro, un, deux, trois ou quatre hétéroatomes, qui sont choisis parmi le groupe constitué de fluor, de chlore, de brome et d'iode, et ne contient de surcroît pas d'autres hétéroatomes.

10. Procédé selon l'une des revendications 1 à 9, dans lequel la base de Lewis L_{N} est choisie parmi le groupe constitué des pyridines, picolines, lutidines, collidines, bipyridines, pyridazines, pyrimidines, pyrazines, quinoléines et isoquinoléines.

11. Procédé selon l'une des revendications 1 à 10, dans lequel la base de Lewis L_{N} est choisie parmi le groupe constitué de pyridine, de 4-diméthylaminopyridine et de leurs mélanges.

12. Procédé selon l'une des revendications 1 à 11, dans lequel la synthèse est effectuée dans un solvant aprotique.

13. Procédé selon la revendication 12, dans lequel le solvant est la pyridine.

14. Procédé de synthèse de composés d'oxyphosphore, dans lequel le procédé comprend les étapes suivantes dans l'ordre indiqué :
c) la synthèse d'un précurseur de phosphore(V) contenant de l'azote de la formule (I) selon le procédé de synthèse de précurseurs de phosphore(V) contenant de l'azote de la formule (I) selon l'une des revendications 1 à 13 ;
d) la réaction du précurseur de phosphore (V) contenant de l'azote de la formule (I) avec un nucléophile.

15. Procédé selon la revendication 14, dans lequel le nucléophile est choisi parmi le groupe constitué d'alcools, d'ammoniac, d'amines primaires, d'amines secondaires, d'amines tertiaires, d'azoles, de composés organométalliques et de fluorure.
